(19) Europäisches Patentamt
European Patent Office
Office européen des brevets

(11) EP 3 335 441 B1

# (12) EUROPEAN PATENT SPECIFICATION

(45) Date of publication and mention of the grant of the patent:
**29.05.2019 Bulletin 2019/22**

(21) Application number: **15756878.3**

(22) Date of filing: **20.08.2015**

(51) Int Cl.:
***H04W 4/42*** *(2018.01)* ***H04L 29/08*** *(2006.01)*
***G07B 15/02*** *(2011.01)*

(86) International application number:
**PCT/EP2015/069165**

(87) International publication number:
**WO 2017/028928 (23.02.2017 Gazette 2017/08)**

## (54) DETECTING PRESENCES INSIDE VEHICLES OF PASSENGERS USING SMART PERSONAL COMMUNICATION DEVICES, IN PARTICULAR SMARTPHONES, WITH REGARD TO A METHOD, A DIGITAL TOOL, THE DEVICE, A GATEWAY AND A BIBO-SYSTEM USED THEREFORE

DETEKTION DER ANWESENHEIT VON PASSAGIEREN IN EINEM FAHRZEUG MITHILFE VON INTELLIGENTEN PERSÖNLICHEN KOMMUNIKATIONSVORRICHTUNGEN, INSBESONDERE SMARTPHONES, HINSICHTLICH EINEM VERFAHREN, EINEM DIGITALEN WERKZEUG, DER VORRICHTUNG, EINEM GATEWAY UND EINEM BIBO-SYSTEM, DIE DAFÜR VERWENDET WERDEN

DÉTECTION DE PRÉSENCES À L'INTÉRIEUR DE VÉHICULES DE PASSAGERS À L'AIDE DE DISPOSITIFS DE COMMUNICATION PERSONNELS INTELLIGENTS, EN PARTICULIER DE TÉLÉPHONES INTELLIGENTS, ASSOCIÉE À UN PROCÉDÉ, À UN OUTIL NUMÉRIQUE, AU DISPOSITIF, À UNE PASSERELLE ET À UN SYSTÈME BIBO UTILISÉS À CET EFFET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.06.2018 Bulletin 2018/25**

(73) Proprietor: **Siemens Mobility AG**
**8304 Wallisellen (CH)**

(72) Inventors:
- **RAMIREZ, Alejandro**
  **80797 München (DE)**
- **SCHINDHELM, Corina Kim**
  **81539 München (DE)**
- **SCHWARZER, Stefan**
  **90451 Nürnberg (DE)**
- **WAAS, Christian**
  **CH-8047 Zürich (CH)**
- **WISCHEROPP, Dirk**
  **81827 München (DE)**

(56) References cited:
**WO-A1-2015/067479** **DE-A1-102012 009 610**
**US-A1- 2012 096 249**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 335 441 B1

## Description

The invention refers to a Method for presence detection inside a vehicle of a passenger using a Smart Personal Communication Device according to the preamble of claim 1, a Digital Tool for presence detection inside a vehicle of a passenger using a Smart Personal Communication Device according to the preamble of claim 9, a Smart Personal Communication Device for presence detection inside a vehicle of a passenger using a Smart Personal Communication Device according to the preamble of claim 19, a Vehicular Gateway for presence detection inside a vehicle of a passenger using a Smart Personal Communication Device according to the preamble of claim 27 and a BIBO-System according to the preamble of claim 35.

To detect accurately the presence inside a vehicle of a passenger in general a variety of sensors measuring the presence can be used as there are a light sensor, a proximity sensor, an accelerometer, a gyroscope, a pressure sensor, a relative humidity sensor and temperature sensor, a magnetic field sensor or an "Inertial Measurement Unit [IMU]".

The advantage of the given sensor types is that they are mostly implemented or realized in nowadays modern smartphones, e.g. those with Android operating system. The modern smartphones include multiple sensors to enable programmers to develop more sophisticated apps and games for smartphones, where users do not only tab on the screen for interacting with their smartphones, but e.g. rotate and shake it, or use their smartphone as a compass.

Of course, smartphones don't necessarily include sensors of every single type. In general, many devices already have an accelerometer and a compass built-in, but, today, few have barometers. Moreover, a device can have more than one sensor of the same type. Sensor availability doesn't only vary from device to device; it can also vary between versions of the Android on the same device.

Some of the sensors are hardware-based, some software-based. Hardware-based sensors are physical components built into the devices. They gather their data by measuring specific environmental properties. Software-based or virtual sensors deliver information after applying signal processing on data from one or multiple hardware-based sensors.

Besides the sensors listed above, more components inside smartphones exist which could be used for environmental pattern recording. The microphone as an example could be used to listen to specific sound patterns outside of the human hearing range generated by a gateway in a specific vehicle such as a bus in order to clearly relate the smartphone to the vehicle respectively the bus. However due to privacy concerns, using the microphone or the camera were excluded as part of the presence detection in a vehicle environment.

Nevertheless a smartphone will be an appropriate candidate for detecting accurately the presence of a passenger inside a vehicle.

The presence detection in a vehicle environment, especially when the vehicle is a public transport vehicle such as bus, train, city-/urban railway, underground/subway, tramway, taxi cab or airplane etc., opens up diverse application perspectives with regard to electronic ticketing.

Electronic ticketing has been with us for quite a while. Tickets for air travel are already mainly electronic, and a similar case can be seen with long distance train travel. Such tickets are usually bought in advance, for example through electronic means.

Even more convenient travel experiences for passengers can be achieved by removing the need for booking tickets in advance. In order to achieve this, two concepts exist: "**C**heck **I**n/**C**heck **O**ut [CICO]" and "**B**e **I**n/**B**e **O**ut [BIBO]".

The CICO-concept implies manually checking into a vehicle or station, travelling, and then manually checking out. This checking in and out may be done by moving an identification card close to a reader in the vehicle/station, or other methods like clicking on a smartphone screen. An advantage of the CICO-systems over the regular electronic booking is that no preparation has to be taken in advance, allowing for spontaneous travel. Another advantage is that the traveler only has to pay for the travel segments that were actually used.

The BIBO-concept goes beyond and even removes the necessity for checking in and out of the vehicle/station manually, achieving a detection and identification of the passenger through automatic means. The BIBO-approach allows travelers to hop on and off vehicles, meanwhile automatically booking the proper ticket.

<u>Challenges for BIBO-systems</u>:

The most difficult problem to be solved by a BIBO-system is to accurately detect the presence of a passenger inside a vehicle.

The way most BIBO-systems are working is to include a wireless transceiver inside a credit card sized dedicated BIBO-ticket. This ticket will either actively send beacons, which may be read by a bus (or any other public transport vehicle) in the direct vicinity. Another option is for the BIBO-ticket to receive beacons sent by the vehicle, as to know inside which vehicle it is located. Usually, a communications protocol will take care of securely exchanging ID information, to authenticate and eventually bill the customer.

The coupling between vehicle and passenger is thus made just by observing which vehicle can be seen by the passenger's BIBO-device (or which BIBO-device can be seen by the vehicle) during the travel from one station to the next. The wireless range will thus be the defining factor for this coupling, and a constant polling will make sure that the passenger is still inside the vehicle.

Such systems may be effective for long range train travel as well as air travel, but important problems arise with shorter distances. As an example, if a person has a BIBO-ticket and drives with his or her car next to a BIBO-enabled bus during a traffic jam, it is very probable that the BIBO-ticket will be in wireless range of the bus, and thus the person would be detected as being inside the bus. Such a scenario leads to "false positives" and hence, customer complaints. A similar example leading to "false positives" would be a bicycle driver behind a bus during rush hour.

Some solutions have been proposed in the state-of-the-art to reduce these "false positives", which typically lead to additional infrastructure making the system more costly and complicated.

Another important challenge is low power usage. If the BIBO-ticket contains active component and a battery, power management techniques must ensure than said battery can live for a long time.

From the prior published German Patent Application (DE 10 2012 009 610 A1) it is known a method and a device for acquiring and billing of service fees for journey of a passenger in a vehicle e.g. public transport vehicle such as bus, tram and watercraft, from a starting location to a destination, which involves billing service fees by temporarily comparing acceleration profile of vehicle with acceleration profile of detected storage mediums of passenger. The method involves detecting storage mediums i.e. smart cards, associated with a passenger in a vehicle, i.e. public transport, by using a detecting system located in the vehicle. A location and a timestamp are created and stored. A service fee is detected and/or collected by a vehicle-side, passenger-side or central authority. The service fee is billed by temporarily comparing an acceleration profile of a vehicle with an acceleration profile of the detected storage mediums of the passenger.

The method/device enables acquiring and billing of the service fees with less installation and circuitry effort while ensuring enhanced riding of the passenger and recognition of the passenger in the vehicle.

Smartphone-BIBO-Concept according to post published European Patent Application (Appl.-No.14168297.1):

As smartphones are wide spread and many people use them in their daily life, the idea is to turn smartphones into BIBO-devices. Smartphones come with many built in sensors, e.g. accelerometer, pressure sensor and a compass, which can be used to create a specific profile. This profile will be unique to the vehicle in which it was recorded and will be compared to the vehicle's profile.

A Smartphone-based BIBO-system includes not only the smartphone but consists of all the following components:

- Vehicle: e.g. bus or tram,
- BIBO Gateway (BGW): BIBO communication gateway (WLAN, Bluetooth and/or mobile communication) including a sensor unit,
- Smartphone: Customer's device including sensors and wireless communication (WLAN, Bluetooth and/or mobile communication),
- App: Software application running on the customer's smartphone.

A smartphone being carried by a passenger will be subjected to the same environment than that of the vehicle it is being carried on. Using acceleration as an example of a possible sensor measurement, the smartphone's and the bus's sensor will be exposed to the same forces. Differences in the acceleration experienced by the smartphone and the vehicle will typically come from usage of the phone (e.g. web surfing, making a call) or because of the means of propagation of the acceleration to the smartphone (e.g. a passenger holding a rail of the bus will have a delay between the propagation of the acceleration to the smartphone).

Comparing the pattern obtained between the smartphone and the vehicle, one can identify if they are in the same vehicle. This comparison will be typically done on a BIBO-Gateway due to security reasons and power consumption, but for privacy reasons it may as well be done on the smartphone. Time stamp synchronization will be performed before recording and transmitting data in order to enhance the presence detection.

Review of the different types of sensors mentioned above:

The light sensor and the proximity sensor offer no reasonable possibility of determining presence inside a specific bus or public transport vehicle, since the smartphone can be in a bag the whole time.

Another important challenge is as already mentioned low power usage. So the goal is to use as few sensors as possible. Low power usage of each sensor will also be preferred.

- **Pressure sensor:**

The pressure sensor measures the ambient air pressure in hPa or mbar. Relative changes in height can be determined quite well (based on our measurements changes in height of 1 meter can be identified), whereas absolute values differ strongly from smartphone device to device (two smartphones next to each other can present absolute height differences of 10 meters). Due to the low sampling rate (~4 measurements per second) and the relatively high noise in the raw measurements, important delays can present themselves when measuring. For this reason, those relative changes (for example when driving downhill) will not significantly differ between two closely spaced vehicles driving along the same path.

- **Relative humidity sensor and temperature sensor:**

Relative humidity is the ratio of the partial pressure of water vapor in an air-water mixture to the saturated vapor pressure of water at a prescribed temperature. Relative humidity, expressed as a percent, measures the current absolute humidity relative to the maximum for that temperature. The relative ambient humidity is measured in percent (%) and the temperature is measured in degrees Celsius (°C). Absolute humidity is the water content of air.

The noise and value offset present in the smartphones' sensors for relative humidity is very low, which could make it feasible to use this sensors to find out if two sensors are located in the same vehicle. As the water content of air will be directly affected by the specific amount of people inside a vehicle, it may be used for obtaining a fingerprint of the vehicle.

One important factor to take into account is that the relative humidity can change very fast as the temperature of the sensor (in this case the phone) changes. As the temperature of the sensor is known by the temperature sensor in the phone, one can compensate this to obtain the absolute humidity.

- **Magnetic field sensor:**

This sensor measures the ambient geomagnetic field for all three physical axes <"x, y, z"> in μT. Changes in direction can be determined in a very rough fashion. As long as the smartphone is not exposed to magnets or metal objects, the magnetic field sensor could be used to determine how the orientation of the smartphone is in relation to the bus's orientation.

- **Accelerometer and Gyroscope:**

The acceleration force is measured in m/s2 on all three physical axes <"x, y, z"> including the force of gravity. The gyroscope measures a device's rate of rotation in rad/s around each of the three physical axes <"x, y, z">. The accelerometer also is sensitive enough to allow a distinction between two closely spaced vehicles following the same path.

Since bus movement, user movement and smartphone usage have individual impact to the axis rotation of a smartphone, the gyroscope can barely support to answer the question in which position the smartphone resides and much less the gyroscope offer a distinct pattern to determine the presence of a smartphone inside a vehicle. The gyroscope as a stand-alone sensor is not sufficient.

- **Inertial Measurement Unit (IMU):**

An inertial measurement unit (IMU) is a device that embeds usually an accelerometers and gyroscopes, sometimes also magnetometers. Highly expensive IMUs are usually used as an inertial navigation system used in airplanes, spacecraft or even vessels. Data collected from the IMU's sensors allows a computer to track a craft's position, using a method known as dead reckoning.

The usage within a smartphone BIBO system is not to determine the position, but the movement pattern of a public transport vehicle, e.g. a bus. Inside each public transport vehicle, at least one IMU will be installed, recording the movement of the bus. This measurement will serve as a reference measurement to which all measurements recorded from smartphones potentially inside the bus need to be compared to.

It is an object of the invention to detect presences inside vehicles of passengers using Smart Personal Communication Devices, in particular smartphones, and propose a Method, a Digital Tool, the Device, a Gateway and a BIBO-System used therefore, which each enables easily with a minimum of hardware complexity an automated accurate detection of the coupling between the passenger and the vehicle.

This object is solved based on a Method for presence detection defined in the preamble of claim 1 by the features in the characterizing part of claim 1.

This object is further solved based on a Digital Tool for presence detection defined in the preamble of claim 9 by the features in the characterizing part of claim 9.

Furthermore the object is solved based on a Smart Personal Communication Device for presence detection defined in the preamble of claim 19 by the features in the characterizing part of claim 19.

Moreover the object is solved based on a Vehicular Gateway for presence detection defined in the preamble of claim 27 by the features in the characterizing part of claim 27.

All after the object is also solved based on a BIBO-System for presence detection defined in the preamble of claim 35 by the features in the characterizing part of claim 35.

The idea underlying the invention is to detect the presence inside a vehicle of a passenger using a Smart Personal Communication Device, in particular a smartphone, by

(**a**) executing in a Signal Pre-Processing Step of independently pre-processing at least one passenger-related first sensor signal of the Smart Personal Communication Device and at least one vehicle-related second sensor signal of the vehicle for each of the first and second signals at least a Re-Sampling and a Magnitude Calculation to induce signal-specific magnitude values, which could be complemented each by executing a Clipping Detection being executed preferably between the Re-Sampling and the Magnitude Calculation,

(**b**) applying in a Vehicle Identification Step for comparing the signal-specific magnitude values a "Cross-Correlation Function [CCF]" such that the signal-specific magnitude values are executed in the order of "Overlapping in Time Domain", "Windowed Cross-Correlation" and Metrification, in particular by at least one of three different metrics, to induce due to the Metrification at least one metric-based identification value and

(**c**) comparing in the Vehicle Identification Step the at least one metrification-based identification value each with an overall threshold value such that, if one of the at least one metrification-based identification value is below or below and equal to the threshold value, a "NO"-statement regarding the presence of the passenger in the vehicle is made otherwise a "YES"-statement regarding the presence of the passenger in the vehicle is made, whereby in particular an output quantity is provided correspondingly, which is preferably a Boolean value.

This idea is realized in a Method for presence detection (*cf. claim 1*), a Digital Tool for presence detection (*cf. claim 9*), a Smart Personal Communication Device for presence detection (*cf. claim 19*), a Vehicular Gateway for presence detection (*cf. claim 27*) and a BIBO-System for presence detection (*cf. claim 35*).

Of a sui generis design the subject matter of the invention is preferably on one side either a Method or a Digital Tool and on the other either a Device, a Gateway or a System.

The Digital Tool according to the claim 9 includes a program module running on a processor, whereby the program module is preferably downloadable from a server or cloud (*cf. claim 17)* or is uploadable via a "Universal Serial Bus [USB]"-stick (*cf. claim 18*) or in addition is stored, uploadable or downloadable into a storage media being inserted or insertable into the Device or the Gateway including a processor (*cf. claim 19 respectively claim 27*). Regarding the cited options (alternatives) the Digital Tool is preferably an "App" (Application Software) running on processors of different radio devices, which could be a desktop PC or an "All-In-One" PC incorporating each a radio interface, a smartphone, a notebook, a tablet etc. In other words the Digital Tool is preferably a purpose-designed computer program product. The Digital Tool can be sold or distributed separately or in common with the Device, the Gateway or the System for presence detection. Such a Device, Gateway or System could be for example a telecommunication appliance, a vehicular controlling system, etc.

Further expedient improvements of the invention associated with corresponding advantages are stated in the other dependent claims.

Moreover other advantageous developments of the invention arise out of the following description of a preferred embodiment of the invention according to the FIGURES 1 to 12b. They show:

FIGURE 1 a scenario for detecting inside a vehicle, preferably a bus, the presence of a passenger using a Smart Personal Communication Device, preferably a smartphone,

FIGURE 2 a layout of a Digital Tool with a program module for data processing being executable on a processor, in particular a processor of the Smart Personal Communication Device or a Vehicular Gateway in the vehicle for detecting the presence of the passenger using the Smart Personal Communication Device, preferably the smartphone, according to the FIGURE 1,

FIGURE 3a an exemplary record of first acceleration signals generated by an accelerometer or an accelerometer and a gyroscope due to measuring acceleration forces on all three physical axes <"x, y, z"> being exerted on the Smart Personal Communication Device used by the passenger according to the FIGURE 1 used as at least one passenger-related first sensor signal,

FIGURE 3b an exemplary record of second acceleration signals generated by an accelerometer or an accelerometer and a gyroscope due to measuring acceleration forces on all three physical axes <"x, y, z"> being exerted on the vehicle respectively the Vehicular Gateway in the vehicle according to the FIGURE 1 used as at least one vehicle-related second sensor signal,

FIGURE 4 a layout of a Signal Pre-Processing Step of the Digital Tool according to the FIGURE 2 for preprocessing the passenger-related first sensor signal of the Smart Personal Communication Device,

FIGURE 5 a layout of a Signal Pre-Processing Step of the Digital Tool according to the FIGURE 2 for preprocessing the vehicle-related second sensor signal of the vehicle respectively the Vehicular gateway in the vehicle,

FIGURE 6a a record of the pre-processed passenger-related acceleration signals after a Clipping Detection with a heavy signal clipping according to the FIGURE 4,

FIGURE 6b a record of the pre-processed vehicle-related second acceleration signals after a Clipping Detection according to the FIGURE 5,

FIGURE 7a based on the exemplary record shown in FIGURE 3a a record of a first Magnitude Calculation Signal after a Magnitude Calculation according to the FIGURE 4,

FIGURE 7b based on the exemplary record shown in FIGURE 3b a record of a second Magnitude Calculation Signal after a Magnitude Calculation according to the FIGURE 5,

FIGURE 8 a layout of a Vehicle Identification Step of the Digital Tool according to the FIGURE 2 for the pre-processed first and second sensor signals according to the FIGURES 4 and 5,

FIGURE 9 a principle diagram showing when the pre-processed first and second sensor signals according to the FIGURES 4 and 5 are overlapped in the time domain,

FIGURE 10a based on the pre-processed passenger-related first sensor signal according to the FIGURE 4 a first Magnitude Calculation Signal according to the FIGURE 7a with a "Sliding Window",

FIGURE 10b based on the pre-processed vehicle-related second sensor signal according to the FIGURE 5 a second Magnitude Calculation Signal according to the FIGURE 7b with a "Sliding Window",

FIGURE 10c based on the exemplary record shown in the FIGURES 10a and 10b the illustrative application of the "Windowed Cross-Correlation [WCC]",

FIGURE 11 based on the exemplary record shown in the FIGURE 10c the illustrative application of a Metrification according to the Vehicle Identification Step shown in the FIGURE 8 using a first metric defining of a "Windowed cross-correlation [WCC]"-function shown in the FIGURE 10c an exemplary, illustrative "Peak-to-Root Mean Square [RMS]"-Ratio calculation with the "Root Mean Square [RMS]" of the WCC-function called as "Cross-Correlation Energy [CCE]",

FIGURE 12a based on the application of a Metrification according to the Vehicle Identification Step shown in the FIGURE 8 using a second metric defining a "Peak Lag Value with the highest percentage of all Peak Lag Values over all cross-correlation windows" called as "Correlation Lag Ratio" (CLR) the lags of individual correlation windows for signal pairs with a high (e.g. 90.3%) "Correlation Lag Ratio",

FIGURE 12b based on the application of a Metrification according to the Vehicle Identification Step shown in the FIGURE 8 using a second metric defining a "Peak Lag Value with the highest percentage of all Peak Lag Values over all cross-correlation windows" called as "Correlation Lag Ratio" (CLR) the lags of individual correlation windows for signal pairs with a low (e.g. 13.9%) "Correlation Lag Ratio".

FIGURE 1 depicts a scenario for detecting inside a vehicle VEH such as a bus the presence of a passenger PAS using a Smart Personal Communication Device SPCD, preferably a smartphone. However, the vehicle VEH is preferably a public transport vehicle such as - besides the bus - train, city-/urban railway, underground/subway, tramway, taxi cab or airplane etc.

The depicted scenario is based on a BIBO-system BSY formed by the vehicle VEH with a Vehicular Gateway VGW located therein and the passenger PAS with the Smart Personal Communication Device SPCD entering the vehicle VEH respectively the bus and thereby communicating with the Vehicular Gateway VGW via a communication link COL. In this context the BIBO-system BSY is used for a BIBO-based electronic ticketing. For this purpose the Vehicular Gateway VGW is connected with a Ticketing Service and Control Center TSCC. The electronic ticketing as a use case using presence detection of the passenger PAS inside the vehicle VEH is well known and thus not the subject matter of the present invention respectively the patent application.

Nevertheless, the use case of electronic ticketing is an appropriate example of a targeted deployment of the presence detection. To carry out the cited presence detection the Smart Personal Communication Device SPCD and in particular well known components located therein are used, which are appropriate for this purpose. These components are a sensor SE, a processor PRC with a processor-assigned storage media STM and a transceiver unit TRU forming a Functional Unit FTU, whereby the processor PRC is connected each with the sensor SE and the transceiver unit TRU. The same Functional Unit FTU comprising the sensor SE, the processor PRC and the transceiver unit TRU is implemented in the Vehicular Gateway VGW. In addition for the electronic ticketing the Vehicular Gateway VGW includes a communication interface CIF connected also to the processor PRC which establishes the connection between the Vehicular Gateway VGW and the Ticketing Service and Control Center TSCC.

Due to the usage of the sensor SE in both the Smart Personal Communication Device SPCD and the Vehicular Gateway VGW and its initial operation each the sensor SE in the Smart Personal Communication Device SPCD generates a first sensor signal SS-1, while the sensor SE in the Vehicular Gateway VGW generates a second sensor signal SS-2, which could be regarded to some extent as a "reference signal" or simply "reference" to the first sensor signal SS-1. The first sensor signal SS-1 is depicted in the FIGURE 1 as a modified triangle (triangle with one curved triangle side), whereas the second sensor signal SS-2 is depicted in the FIGURE 1 as a normal triangle (triangle with three straight triangle sides).

Depending on whether the sensor SE in the Smart Personal Communication Device SPCD is preferably designed as an accelerometer or an accelerometer and a gyroscope or alternatively designed as a pressure sensor, a relative humidity sensor and temperature sensor, a magnetic field sensor or an "Inertial Measurement Unit"-sensor the first sensor signal SS-1 is preferably a first acceleration signal ACS-1 or alternatively a first pressure signal PRS-1, a first humidity and temperature signal HTS-1, a first magnetic field signal MFS-1 or a first "Inertial Measurement Unit"-signal IMUS-1.

Correspondingly, depending on whether the sensor SE in the Vehicular Gateway VGW is preferably designed as an accelerometer or an accelerometer and a gyroscope or alternatively designed as a pressure sensor, a relative humidity sensor and temperature sensor, a magnetic field sensor or an "Inertial Measurement Unit"-sensor the second sensor signal SS-2 is preferably a second acceleration signal ACS-2 or alternatively a second pressure signal PRS-2, a second humidity and temperature signal HTS-2, a second magnetic field signal MFS-2 or a second "Inertial Measurement Unit"-signal IMUS-2.

Based on the first sensor signal SS-1 and the second sensor signal SS-2 respectively each the preferred manifestation ACS-1, ACS-2 or the alternate manifestation PRS-1, PRS-2, ATS-1, ATS-2, MFS-1, MFS-2, IMUS-1, IMUS-2 the presence detection of the passenger PAS in the vehicle VEH is carried out. This presence detection can be done either in the Smart Personal Communication Device SPCD or alternatively in the Vehicular Gateway VHW.

When the presence detection is done in the Smart Personal Communication Device SPCD the second sensor signal SS-2 respectively the preferred or alternate modifications thereof must be transmitted from the Vehicular Gateway VGW via the communication link COL to the Smart Personal Communication Device SPCD. The way taken by this second sensor signal SS-2 starts at the sensor SE in the Vehicular Gateway VGW which generates and forwards it subsequently to the processor PRC which processes and forwards it then to the transceiver unit TRU, where the second sensor signal SS-2 is transmitted via the communication link COL to the transceiver unit TRU of the Smart Personal Communication Device SPCD, which forwards the second sensor signal SS-2 to the processor PRC of the Smart Personal Communication Device SPCD. Being reached at the processor PRC of the Smart Personal Communication Device SPCD the processor PRC carries out the cited presence detection of the passenger PAS in the vehicle VEH, because both sensor signals, the first sensor signal SS-1 and the second sensor signal SS-2, are preferably stored in the storage media STM and thus available in the processor PRC. According to this option of presence detection in the Smart Personal Communication Device SPCD the triangles of sensor signals are depicted in triangles with solid lines. How this presence detection is carried out will be described (further) below with regard to FIGURES 2, 4, 5 and 8.

The same signal way will be used in the case that the presence detection is done similarly in the Vehicular Gateway VGW, however, in the opposite direction which means that now the first sensor signal SS-1 respectively the preferred or alternate modifications thereof, is transmitted via the communication link COL from the Smart Personal Communication Device SPCD to the Vehicular Gateway VGW, where the presence detection is done in the processor PRC of the vehicular gateway VGW again according to FIGURES 2, 4, 5 and 8. With regard to this option of presence detection in Vehicular Gateway VGW the triangles depicting the sensor signals are triangles with dashed lines.

FIGURE 2 shows a layout of a Digital Tool DT with a program module PGM for data processing being executable on a processor PRC, in particular the processor PRC of the Smart Personal Communication Device SPCD or the Vehicular Gateway VGW in the vehicle VEH for detecting the presence of the passenger PAS using the Smart Personal Communication Device SPCD, preferably the smart phone, according to the FIGURE 1. Thereby the program module PGM is preferably downloadable from a server or cloud or is uploadable e.g. via a "Universal Serial Bus [USB]"-stick.

Furthermore it is possible that the Digital Tool DT respectively the program module PGM is stored, uploadable or downloadable into a computer-readable storage media STM being inserted or insertable into or integrated in the Smart Personal Communication Device SPCD or the Vehicular Gateway VGW with the processor PRC. The computer-readable storage media STM is assigned to the processor PRC and forms with the processor PRC a common functional unit such that the processor PRC executes the program module PGM stored in the storage media STM.

The program module PGM designed preferably as an algorithm uses as input quantities for the presence detection at least one first sensor signal SS-1 and at least one second sensor signal SS-2 generated by the sensors SE of the Smart Personal Communication Device SPCD and the Vehicular Gateway VHW according to the FIGURE 1. By inputting these two sensor signals SS-1, SS-2 the program module PGM respectively the algorithm is able to generate an output quantity OQ which indicates whether due to the two sensor signals SS-1, SS-2 being generated the presence of the passenger in the vehicle is detected or not. In other words the program module PGM respectively the algorithm returns preferably a Boolean value BV indicating whether the passenger is inside the vehicle ("YES") or not ("NO").

For doing this kind of presence detection the program module PGM of the Digital Tool DT processes the first sensor signal SS-1 and the second sensor signal SS-2 independently in each a Signal Pre-Processing Step SPPS. After that both the pre-processed first sensor signal SS-1 and the pre-processed second sensor signal SS-2 are further processed in a Vehicle Identification Step VIS, before a "YES"-Statement Y-S or a "NO"-Statement N-S is made and the corresponding output quantity OQ respectively the Boolean value BV is provided or outputted. What happens in each of the Signal Pre-Processing Step SPPS for the first sensor signal SS-1 respectively the second sensor signal SS-2 is shown and described in more detail in respectively with respect to FIGURE 4 or in respectively with regard to FIGURE 5. In FIGURE 8 it is shown and respectively described in more detail the process carried out in the Vehicle Identification step VIS.

FIGURE 3a shows an exemplary record of preferred passenger-related first acceleration signals ACS-1 generated preferably by an accelerometer or an accelerometer and a gyroscope due to measuring acceleration forces on all three physical axes <"X, Y, Z"> being exerted on the Smart Personal Communication Device SPCD used by the passenger PAS according to the FIGURE 1 used as the at least one passenger-related first sensor signal SS-1. The passenger-related signal is superimposed by acceleration resulting from the passenger interacting with the smartphone that was used for signal recording. The first acceleration signals ACS-1 relating to the three physical axes <"X, Y, Z"> are marked with "X", "Y", "Z".

FIGURE 3b shows an exemplary record of preferred vehicle-related second acceleration signals ACS-2 generated preferably by an accelerometer or an accelerometer and a gyroscope due to measuring acceleration forces on all three physical axes <"x, y, z"> being exerted on the vehicle VEH respectively the Vehicular Gateway VGW in the vehicle VEH according to the FIGURE 1 used as the at least one vehicle-related second sensor signal SS-2. The second acceleration signals ACS-2 relating to the three physical axes <"X, Y, Z"> are marked with "X", "Y", "Z".

FIGURE 4 shows a layout of the Signal Pre-Processing Step SPPS of the Digital Tool DT according to the FIGURE 2 for pre-processing the at least one passenger-related first sensor signal SS-1 of the Smart Personal Communication Device SPCD. Goal of the pre-processing is the conversion of the device-dependant input signals to signals with specified properties, e.g. specified sampling rate. Furthermore several checks are performed to identify invalid signals that violate minimum standards, e.g. minimum signal length.

The Signal Pre-Processing Step SPPS of the algorithm consists of three sub-steps a first pre-processing sub-step performing a Re-Sampling RS, a second pre-processing sub-step performing a Clipping Detection CD and a third pre-processing sub-step performing a Magnitude Calculation MC as shown in the FIGURE 4. From these sub-steps the first pre-processing sub-step performing the Re-Sampling RS and the third pre-processing sub-step performing the Magnitude Calculation MC are mandatory for the presence detection, whereas the second pre-processing sub-step performing the Clipping Detection CD is optional.

In the first pre-processing sub-step after the at least one first sensor signal SS-1 respectively the preferred passenger-related first acceleration signals ACS-1 has/have been inputted into the program module PGM the Re-Sampling RS is performed, because the recorded data included the passenger-related first sensor signals SS-1 respectively the preferred passenger-related first acceleration signals ACS-1 has/have a non-uniformly distributed sampling rate of approximately 100 Hz. The Re-Sampling of the signal at a constant sampling rate of 200 Hz is necessary, because some of the following sub-steps of the Signal Pre-Processing Step SPPS and the Vehicle Identification Step VIS rely on a discrete time signal with a constant sampling rate.

According to the FIGURE 4 the first pre-processing sub-step is followed by the optional second pre-processing sub-step performing the Clipping Detection CD.

Acceleration sensors such as a preferred accelerometer measure the acceleration in $m/s^2$ in all three axes or an accelerometer and a gyroscope measuring the the acceleration in $m/s^2$ and the angular velocity in °/s in all three axes. Clipping occurs at approximately $\pm 2$ g (with $1 g \approx 9.81 m/s^2$) for all smartphones used during the project. Clipping changes the time series in a way that cannot be reconstructed. In the frequency domain, clipping usually introduces harmonics that cannot be removed without loss of information, therefore clipping needs to be avoided.

Clipping usually occurs in the axis pointing towards earth first, because it has an offset of 1 g that is more easily brought to clipping by adding a mere 1 g. This can happen easily by smashing the device onto a hard surface. Therefore clipping detection uses an "OR"-operation to concatenate the clipping indicators of all three axes.

Clipping detection serves three functions:

1. It identifies the amount of unclipped signal that remains after clipping detection. If the unclipped signal portion is shorter than a minimum signal necessary for vehicle identification (here: 40 seconds), the signal is marked invalid and will not be used for vehicle identification.
2. For valid signals, it marks regions that include clipping so that further sub-steps of Signal Pre-Processing Step SPPS and the Vehicle Identification Step VIS can ignore those signal portions. Only the unclipped parts of the signal are used for the Vehicle Identification Step VIS (*cf. FIGURE 8*).
3. If clipping occurs in a reference measurement, the measurement is marked invalid regardless of the amount of signal left. Reference measurement units need to be installed in a way that no clipping can occur during normal vehicle operation. In case of an accident, clipping might still occur however.

FIGURE 6a shows a record of the passenger-related first acceleration signals ACS-1 after a Clipping Detection with a heavy signal clipping according to the FIGURE 4. The first acceleration signals ACS-1 after the Clipping Detection and the parts thereof relating each to the three physical axes <"X, Y, Z"> are marked with "X", "Y", "Z". The passenger-related first acceleration signals ACS-1 would be marked as invalid by clipping detection, because the longest unclipped signal portion is shorter than 40 seconds.

According to the FIGURE 4 the second pre-processing sub-step is followed by the mandatory third pre-processing sub-step performing the Magnitude Calculation MC.

Prior to Vehicle Identification Step VSI (*cf. FIGURE 8*), the 3-component acceleration vectors from the measurements of both, the passenger-related first sensor signals SS-1 respectively the preferred passenger-related first acceleration signals ACS-1 and the vehicle-related second sensor signals SS-2 respectively the preferred vehicle-related second acceleration signals ACS-2, have to be reduced to single-component vectors. This demand results from the freedom of rotation around all axes that a smartphone usually has during normal user interaction. While the reference measurement unit can be installed at pre-defined orientation (e.g. x axis pointing towards the direction of travel and z axis pointing towards earth), the user might rotate his or her smartphone freely around all axes. In the FIGURE 1 the typical and well-known coordinate system definition used for smartphones is depicted.

Research has shown that the identification and correction of phone rotation during the measurement is a complicated and error-prone task. Two approaches were evaluated:

1. Correction of earth direction so that the z axis points towards earth. The remaining acceleration components in x and y direction were squared summed and used for vehicle identification. Correction of earth can either be performed by continuous direction estimation of the constant earth gravity or be using the known rotation vector (*cf. FIGURE 1*). In both ways, assumptions about the frequency of rotation have to be made that proved impossible to define for all types of user interaction and for all types of vehicles. In many cases, vehicle rotation (e.g. cornering of a bus in traffic) was misinterpreted as phone rotation by the user and vice versa. This usually resulted in far worse identification results than with the approach of calculating the magnitude.

2. Correction of phone rotation around all axis so that the x axis points in direction of travel of the vehicle and the z axis points towards earth. This was evaluated using the Google rotation vector sensor with even worse results than approach 1.

Finally, it was concluded that phone rotation should neither be identified nor corrected for, which resulted in a robust algorithm. The acceleration magnitude is calculated via square root of the sum of the squared components, followed by subtraction of gravity of earth (1 g):

$$|a|^* = \sqrt{a_x^2 + a_y^2 + a_z^2} - 1$$

The calculation of |a|* is the result of the Signal Pre-Processing Step SPPS in the program module PGM. According to the FIGURE 4 the calculation of |a|* lead to first signal-specific magnitude values MV-1.

FIGURE 7a shows based on the exemplary record shown in FIGURE 3a a record of a first Magnitude Calculation Signal MCS-1 including the first signal-specific magnitude values MV-1 after the Magnitude Calculation MC according to the FIGURE 4.

FIGURE 5 shows a layout of a Signal Pre-Processing Step SPPS of the Digital Tool DT according to the FIGURE 2 for pre-processing the at least one vehicle-related second sensor signal SS-2 of the vehicle VEH respectively the Vehicular Gateway VGW in the vehicle VEH. Again the goal of the pre-processing is the conversion of the device-dependant input signals to signals with specified properties, e.g. specified sampling rate. Furthermore several checks are performed to identify invalid signals that violate minimum standards, e.g. minimum signal length.

The Signal Pre-Processing Step SPPS of the algorithm comprises again the three sub-steps the first pre-processing sub-step performing the Re-Sampling RS, the second pre-processing sub-step performing the Clipping Detection CD and the third pre-processing sub-step performing the Magnitude Calculation MC as shown in the FIGURE 5. Again from these sub-steps the first pre-processing sub-step performing the Re-Sampling RS and the third pre-processing sub-step performing the Magnitude Calculation MC are mandatory for the presence detection, whereas the second pre-processing sub-step performing the Clipping Detection CD is optional.

In the first pre-processing sub-step after the at least one second sensor signal SS-2 respectively the preferred vehicle-related second acceleration signals ACS-2 has/have been inputted into the program module PGM the Re-Sampling RS is performed, because the recorded data included the vehicle-related second sensor signals SS-2 respectively the preferred vehicle-related second acceleration signals ACS-2 has/have a non-uniformly distributed sampling rate of approximately 100 Hz. The Re-Sampling of the signal at a constant sampling rate of 200 Hz is necessary, because some of the following sub-steps of the Signal Pre-Processing Step SPPS and the Vehicle Identification Step VIS rely on a discrete time signal with a constant sampling rate.

According to the FIGURE 5 again the first pre-processing sub-step is followed by the optional second pre-processing sub-step performing the Clipping Detection CD.

Acceleration sensors such as a preferred accelerometer measure the acceleration in $m/s^2$ in all three axes or an accelerometer and a gyroscope measuring the acceleration in $m/s^2$ and the angular velocity in °/s in all three axes. Clipping occurs at approximately ±2 g (with 1 g ≈ 9.81 m/s$^2$) for all smartphones used during the project. Clipping changes the time series in a way that cannot be reconstructed. In the frequency domain, clipping usually introduces harmonics that cannot be removed without loss of information, therefore clipping needs to be avoided.

Clipping usually occurs in the axis pointing towards earth first, because it has an offset of 1 g that is more easily brought to clipping by adding a mere 1 g. This can happen easily by smashing the device onto a hard surface. Therefore clipping detection uses an "OR"-operation to concatenate the clipping indicators of all three axes.

Clipping detection serves three functions:

1. It identifies the amount of unclipped signal that remains after clipping detection. If the unclipped signal portion is shorter than a minimum signal necessary for vehicle identification (here: 40 seconds), the signal is marked invalid and will not be used for vehicle identification.
2. For valid signals, it marks regions that include clipping so that further sub-steps of Signal Pre-Processing Step SPPS and the Vehicle Identification Step VIS can ignore those signal portions. Only the unclipped parts of the signal are used for the Vehicle Identification Step VIS (*cf. FIGURE 8*).
3. If clipping occurs in a reference measurement, the measurement is marked invalid regardless of the amount of signal left. Reference measurement units need to be installed in a way that no clipping can occur during normal vehicle operation. In case of an accident, clipping might still occur however.

FIGURE 6b shows a record of the vehicle-related second acceleration signals ACS-2 after a Clipping Detection with a heavy signal clipping according to the FIGURE 5. The second acceleration signals ACS-2 after the Clipping Detection and the parts thereof relating each to the three physical axes <"X, Y, Z"> are marked with "X", "Y", "Z".

According to the FIGURE 5 again the second pre-processing sub-step is followed by the mandatory third pre-processing sub-step performing the Magnitude Calculation MC.

Prior to Vehicle Identification Step VSI (*cf. FIGURE 8*), the 3-component acceleration vectors from the measurements of both, the passenger-related first sensor signals SS-1 respectively the preferred passenger-related first acceleration signals ACS-1 and the vehicle-related second sensor signals SS-2 respectively the preferred vehicle-related second acceleration signals ACS-2, have to be reduced to single-component vectors. This demand results from the freedom of rotation around all axes that a smartphone usually has during normal user interaction. While the reference measurement unit can be installed at pre-defined orientation (e.g. x axis pointing towards the direction of travel and z axis pointing towards earth), the user might rotate his or her smartphone freely around all axes. In the FIGURE 1 the typical and well-known coordinate system definition used for smartphones is depicted.

Research has shown that the identification and correction of phone rotation during the measurement is a complicated and error-prone task. Two approaches were evaluated:

1. Correction of earth direction so that the z axis points towards earth. The remaining acceleration components in x and y direction were squared summed and used for vehicle identification. Correction of earth can either be performed by continuous direction estimation of the constant earth gravity or be using the known rotation vector (*cf. FIGURE 1*). In both ways, assumptions about the frequency of rotation have to be made that proved impossible to define for all types of user interaction and for all types of vehicles. In many cases, vehicle rotation (e.g. cornering of a bus in traffic) was misinterpreted as phone rotation by the user and vice versa. This usually resulted in far worse identification results than with the approach of calculating the magnitude.

2. Correction of phone rotation around all axis so that the x axis points in direction of travel of the vehicle and the z axis points towards earth. This was evaluated using the Google rotation vector sensor with even worse results than approach 1.

Finally, it was concluded that phone rotation should neither be identified nor corrected for, which resulted in a robust algorithm. The acceleration magnitude is calculated via square root of the sum of the squared components, followed by subtraction of gravity of earth (1 g):

$$|a|^* = \sqrt{a_x^2 + a_y^2 + a_z^2} - 1$$

The calculation of |a|* is again the result of the Signal Pre-Processing Step SPPS in the program module PGM. According to the FIGURE 5 the calculation of |a|* lead to second signal-specific magnitude values MV-2.

FIGURE 7b shows based on the exemplary record shown in FIGURE 3b a record of a second Magnitude Calculation Signal MCS-2 including the second signal-specific magnitude values MV-2 after the Magnitude Calculation MC according to the FIGURE 5.

FIGURE 8 shows a layout of the Vehicle Identification Step VIS of the Digital Tool DT according to the FIGURE 2 for the pre-processed first and second sensor signals SS-1, SS-2 according to the FIGURES 4 and 5.

The Vehicle Identification Step VIS of the algorithm compares the passenger-related first sensor signal SS-1 with the vehicle-related second sensor signal SS-2 using a "Cross-Correlation Function [CCF]". Further three metrics are applied to identify if the passenger PAS was travelling inside the vehicle VEH or not.

The Vehicle Identification Step VIS of the algorithm consists of four sub-steps a first identification sub-step performing an "Overlap in Time Domain" OTD, a second identification sub-step performing a "Windowed Cross Correlation" WCC, a third identification sub-step performing a Metrification MEF and a fourth identification sub-step performing a Identification IDF as shown in the FIGURE 8. All these sub-steps are mandatory for the presence detection.

In the first identification sub-step after the first signal-specific magnitude values MV-1 in the first Magnitude Calculation Signal MCS-1 and the second signal-specific magnitude values MV-2 in the second Magnitude Calculation Signal MCS-2 are transferred from the Signal Pre-Processing Step SPPS to the Vehicle Identification Step VIS the "Overlap in Time Domain" OTD is performed, where both signals, the first Magnitude Calculation Signal MCS-1 and the second Magnitude Calculation Signal MCS-2, are checked for sufficient overlap in the time domain.

FIGURE 9 shows according to a principle diagram when the pre-processed passenger-related first sensor signal SS-1 and the vehicle-related second sensor signals SS-2 according to the FIGURES 4 and 5 in the form of the first Magnitude Calculation Signal MCS-1 and the second Magnitude Calculation Signal MCS-2 are overlapped in the time domain. The remaining part (the non-overlapped part) has to be long enough for identification (e.g. 40 seconds); otherwise the measurement is marked invalid and cannot be processed.

According to the FIGURE 8 the first identification sub-step is followed by the second identification sub-step performing the "Windowed Cross Correlation" WCC.

The actual correlation is calculated by a "Windowed Cross Correlation"-function which is represented by a series of correlation functions applied on a "Sliding Window" over each entire valid Magnitude Calculation Signal MCS-1, MCS-2. The "Cross-Correlation Function [CCF]" $\hat{R}xy(m)$ of two signals x and y is defined as

$$\hat{R}_{xy}(m) = \begin{cases} \sum_{n=0}^{N-m-1} x_{n+m} y_n^* & m \geq 0 \\ \hat{R}_{yx}^*(-m) & m < 0 \end{cases}$$

where y* denotes the complex conjugate of y. For real valued y, as in the algorithm, y*=y.

FIGURE 10a shows the pre-processed passenger-related first sensor signal SS-1 according to the FIGURE 4 in the form of the first Magnitude Calculation Signal MCS-1 according to the FIGURE 7a with a "Sliding Window", which is depicted by the grey rectangle in the FIGURE.

FIGURE 10b shows the pre-processed vehicle-related second sensor signal SS-2 according to the FIGURE 5 in the form of the second Magnitude Calculation Signal MCS-2 according to the FIGURE 7b with a "Sliding Window", which is depicted by the grey rectangle in the FIGURE.

FIGURE 10c shows based on the exemplary record shown in the FIGURES 10a and 10b the illustrative application of the "Windowed Cross-Correlation" (WCC). After calculating the "Cross Correlation" of the signal parts inside the "Sliding Window" resulting in a WCC-signal WCCS, which is depicted in the FIGURE 10c, the "Sliding Window" is moved a pre-defined time period to the right and the calculation is repeated until signal end is reached.

There are two parameters for this function: The first one is the window width, which is set to 20 seconds. The second parameter is the step size for the window movement, which is set to 1 second. The peak value and the peak position (which comply with a lag) of the "Cross-Correlation Functions [CCF]" are recorded for all "Cross-Correlation Windows" independently. The "Cross-Correlation Functions [CCF]" themselves are furthermore summarized over all "Cross-Correlation Windows" resulting in an averaged "Cross-Correlation Function [CCF]". Those values are used by the identification metrics for vehicle identification, but only, if the peak lag is within +/- 2 seconds of lag (0). Vehicle-related and passenger-related measurements have to be synchronized better than 2 seconds in time domain for a valid measurement pair.

According to the FIGURE 8 the second identification sub-step is followed by the third identification sub-step performing the Metrification MEF. Goal of the Metrification MEF is to induce at least one metrification-based identification value IDV.

In a preferred embodiment the Metrification MEF is constituted by at least one of three different metrics, a first metric M1 defining a "Peak-to-Root Mean Square [RMS]"-Ratio PRMSR of the "Windowed Cross-Correlation [WCC]"-function (*cf. FIGURE 10c*), whereby the "Root Mean Square [RMS]" of the WCC-function is called "Cross-Correlation Energy [CCE]", a second metric M2 defining a "Peak Lag Value with the highest percentage of all Peak Lag Values over all Cross-Correlation Windows" called as "Correlation Lag Ratio" CLR and a third metric M3 defining a "ratio of a largest part of "Cross-Correlation Energy [CCE]" to a remainder of the "Cross-Correlation Energy [CCE]" over all "Cross-Correlation Windows"" called as "RMS-to-RMS ratio" RRR.

In this context the first metric M1 generates a first metrification-based identification value IDV-1, which corresponds to the "Peak-to-Root Mean Square [RMS]"-Ratio PRMSR, the second metric M2 generates a second metrification-based identification value IDV-2, which corresponds to the "Correlation Lag Ratio" CLR, and the third metric M3 generates a third metrification-based identification value IDV-3", which corresponds to the "RMS-to-RMS ratio" RRR.

All metrification-based identification values IDV, IDV-1, IDV-2, IDV-3 are transferred as input quantities for the fourth identification sub-step performing the Identification IDF. Although the third identification sub-step Vehicle Identification Step VIS performing the Metrification MEF is mandatory for the presence detection this does not mean inevitable that all three metrics are mandatory too. It is sufficient that at least one must be processed, whereas the two other can be processed optionally.

In this fourth identification sub-step the at least one metrification-based identification value IDV, IDV-1, IDV-2, IDV-3 is compared each with an overall threshold value THV, which is preferably at least one of arbitrary and determined experimentally or automatically, such that, if one of the at least one metrification-based identification value IDV, IDV-1, IDV-2, IDV-3 is below or below and equal to the threshold value THV, the "NO"-statement N-S regarding the presence of the passenger PAS in the vehicle VEH is made otherwise the "YES"-statement Y-S regarding the presence of the passenger PAS in the vehicle VEH is made, whereby in particular the output quantity OQ is provided correspondingly, which is preferably the Boolean value BV.

According to a further preferred embodiment - in the case of (i) the "YES"-statement Y-S regarding the presence of the passenger PAS in the vehicle VEH and (ii) the existence of the first and second acceleration signals ACS-1, ACS-2 as the first and second sensor signals SS-1, SS-2 - the first metric M1, the second metric M2 and the third metric M3 are adapted to determine two different types of the vehicles VEH,

- a first vehicle type such as a suburban train, on which small acceleration forces on all three physical axes <"x, y, z"> are exerted, and
- a second vehicle type such as a bus or taxi cab, on which significantly larger acceleration forces on all three physical axes <"x, y, z"> are exerted, such that,
- if the at least one of the three different metrics is the third metric M3 and the third metric M3 equals or is above the overall threshold value THV, the first vehicle type is determined and
- if two of the at least one three different metrics are the first metric M1 and the second metric M2 and both the first metric M1 and the second metric M2 equal or are above the overall threshold value THV, the second vehicle type is determined.

The first metric M1 defining the "Peak-to-Root Mean Square [RMS]"-Ratio PRMSR is based on the "Windowed Cross-Correlation [WCC]"-function given by the formula of the "Cross-Correlation Function [CCF]" $\hat{R}xy(m)$ of two signals x and y is defined as

$$\hat{R}_{xy}(m) = \begin{cases} \sum_{n=0}^{N-m-1} x_{n+m} y_n^* & m \geq 0 \\ \hat{R}_{yx}^*(-m) & m < 0 \end{cases}$$

and depicted in the FIGURE 10c.

If x=y, the "Cross-Correlation Function [CCF]" is the so called "Auto-Correlation Function [ACF]" that has a maximum at m=0, because both signals are identical. Depending on x, the maximum might be constant, local or global. Periodic signals usually show a multitude of local maxima. Noisy signals have a noisy correlation function and so on. If x and y are less equal, the correlation function will differ from this ideal output. The correlation function maximum is also called "peak".

If y is a time shifted version of x, the maximum will move to the left or to the right accordingly. This movement is called "lag" and is measured in seconds, if x and y are measured in seconds.

Therefore three main parameters can be used for analysis: "Peak" magnitude, "Root Mean Square [RMS]", and "lag". The first metric concentrates on peak magnitude. However, research has shown that the magnitude alone has minimum significance, because the signal amplitude is greatly influenced by vehicle type and user interaction. A better differentiating factor is the ratio between the peak magnitude and the root mean square of its surroundings in the correlation function, the so called "Peak-to-Root Mean Square [RMS]"-Ratio PRMSR. The calculation is performed in the ""Cross-Correlation Function [CCF]" averaged over all "Cross-Correlation Windows".

FIGURE 11 shows based on the exemplary record shown in the FIGURE 10c the illustrative application of the Metrification MEF according to the Vehicle Identification Step VIS shown in the FIGURE 8 using the first metric M1 defining of a "Windowed cross-correlation [WCC]"-function shown in the FIGURE 10c an exemplary, illustrative "Peak-to-Root Mean Square [RMS]"-Ratio PRMSR calculation with the "Root Mean Square [RMS]" of the WCC-function called as "Cross-Correlation Energy [CCE]".

In the depicted example the "lag" of the correlation function peak is +50 ms and its magnitude is 8.5e-5. A region centered on the "peak" is cut out with 4 seconds width. This region is used for the "Peak-to-Root Mean Square [RMS]"-Ratio PRMSR calculation. In this example the "Root Mean Square [RMS]"-value inside this region is 5.8e-6. Therefore the "Peak-to-Root Mean Square [RMS]"-Ratio PRMSR is:

$$\mathrm{PRMSR} = \frac{Peak}{RMS} = 14.5$$

Empirical research has shown that ratios above 7.5 are strong and above 10.0 are very strong indicators for passenger-related and vehicle-related measurements being recorded inside the same vehicle. This only holds true for passenger-related and vehicle-related measurements that undergo longitudinal and transversal vehicle acceleration at the same point in time. Measurements in different sections of an articulated vehicle for example will not satisfy this metric.

In some cases, the "Peak-to-Root Mean Square [RMS]"-Ratio PRMSR is above the threshold value while the measurements have not been recorded in the same vehicle. The reason might be nearly identical acceleration profiles for a short period of time, but not for the entire signal duration. This might lead to an averaged "Cross-Correlation Function [CCF]" with a high "Peak-to-Root Mean Square [RMS] "-Ratio, although the maximum peak position differs from window to window; the "Cross-Correlation Functions [CCF]" do not cohere from signal start to signal end.

In this case, the coherence of "peak lags" over all "Cross-Correlation Windows" gives a strong indicator if the measurements have been recorded inside the same vehicle. The individual "peak lags" of all correlation results have been recorded during the "Windowed Cross-Correlation [WCC]".

Thus the second metric M2 is used. For this metric defining the "Peak Lag Value with the highest percentage of all Peak Lag Values over all "Cross-Correlation Windows"" called as the "Correlation Lag Ratio" CLR the percentage or the "Correlation Lag Ratio" CLR is calculated.

FIGURE 12a shows based on the application of the Metrification MEF according to the Vehicle Identification Step VIS shown in the FIGURE 8 using the second metric M2 defining the "Peak Lag Value with the highest percentage of all Peak Lag Values over all cross-correlation windows" M2 called as the "Correlation Lag Ratio" CLR the "lags" of individual "Cross-Correlation Windows" for signal pairs with a high (e.g. 90.3%) "Correlation Lag Ratio" CLR.

FIGURE 12b shows based on the application of the Metrification MEF according to the Vehicle Identification Step VIS shown in the FIGURE 8 using the second metric M2 defining the "Peak Lag Value with the highest percentage of all Peak Lag Values over all cross-correlation windows" called as the "Correlation Lag Ratio" CLR the "lags" of individual "Cross-Correlation Windows" for signal pairs with a low (e.g. 13.9%) "Correlation Lag Ratio" CLR.

Empirical research has shown that a "Correlation Lag Ratio" CLR above 35% is a strong indicator for the measurements being recorded inside the same vehicle.

The introduced first and second metrics M1, M2 above are not strong enough in some cases used with low accelerated vehicles VEH such as suburban trains (called S-Bahn in German). This is expressed in the fact that the form of the resulted correlation differs from those other vehicles. On the one hand the correlation peak is much smaller. On the other hand this peak is also much wider. Nevertheless, the largest part of the correlation energy ("Root Mean Square [RMS]") is still located in the 4 second window introduced above. Thus it is possible to compare the energy in this part to the energy in the remaining part of the correlation. In other words the RMS of the 4 second window around the peak is compared to the RMS of the remainder of the correlation.

Thus the third metric M3 is used. For this metric defining a "ratio of a largest part of "Cross-Correlation Energy [CCE]" to a remainder of the "Cross-Correlation Energy [CCE]"over all "Cross-Correlation Windows"" called as the "RMS-to-RMS Ratio" RRR the ratio or the "RMS-to-RMS Ratio" RRR is calculated.

This process is similar to the first metric and the threshold for it is about 3.

This third metric works reliably with respect to acceleration data measured in suburban trains. Thus each vehicle-related measurement should be assigned to a vehicle classification (e.g. bus, tram, suburban train, etc.). Therefore, the corresponding third metric can be applied depending on this classification.

According to a preferred embodiment the first and the second metrics M1, M2 of the three metrics M1, M2, M3 are used in the Vehicle Identification Step VIS. With respect to this two metrics M1, M2 the statement being made is positive (or true), if the first and the second metrics M1, M2 are above their respective threshold values.

If the vehicle is a suburban train (S-Bahn) then according to a further preferred embodiment only the third metric M3 of the three metrics M1, M2, M3 is used in the Vehicle Identification Step VIS. With respect to this metric M3 the statement being made is positive (or true), if the third metric is above its threshold value.

Hence, if only one metric of the corresponding metrics, the metrics M1, M2 respectively the metric M3 of the preferred embodiments, being used in the Vehicle Identification Step VIS is below its threshold value, the statement being made is negative (or false).

## Claims

1. Method for presence detection inside a vehicle (VEH) of a passenger (PAS) using a Smart Personal Communication Device (SPCD), in particular a smartphone, by which at least one passenger-related first sensor signal (SS-1) of the Smart Personal Communication Device (SPCD) is compared with at least one vehicle-related second sensor signal (SS-2) of the vehicle (VEH), in particular of a Vehicular Gateway (VGW) in the vehicle (VEH), such that a simple "YES"-Statement (Y-S) or NO"-Statement (N-S) regarding the presence of the passenger (PAS) in the vehicle (VEH) is made,

**characterized in that**

(**a**) in a Signal Pre-Processing Step (SPPS) the first and second sensor signals (SS-1, SS-2) are independently pre-processed each by executing at least a Re-Sampling (RS) and a Magnitude Calculation (MC) to induce signal-specific magnitude values (MV-1, MV-2), which in particular are pre-processed additionally each by executing a Clipping Detection (CD) being executed preferably between the Re-Sampling (RS) and the Magnitude Calculation (MC),
(**b**) in a Vehicle Identification Step (VIS)

(**b1**) the signal-specific magnitude values (MV-1, MV-2) are compared by applying a "Cross-Correlation Function [CCF]" such that the signal-specific magnitude values (MV-1, MV-2) are executed in the order of "Overlapping in Time Domain" (OTD), "Windowed Cross-Correlation" (WCC) and Metrification (MEF) to induce due to the Metrification (MEF) at least one metrification-based identification value (IDV, IDV-1, IDV-2, IDV-3) and
(**b2**) the at least one metrification-based identification value (IDV, IDV-1, IDV-2, IDV-3) is compared each with an overall threshold value (THV) such that (IDF), if one of the at least one metrification-based identification value (IDV, IDV-1, IDV-2, IDV-3) is below or below and equal to the threshold value (THV), the "NO"-statement (N-S) regarding the presence of the passenger (PAS) in the vehicle (VEH) is made otherwise the "YES"-statement (Y-S) regarding the presence of the passenger (PAS) in the vehicle (VEH) is made, whereby in particular correspondingly an output quantity (OQ) is provided, which is preferably a Boolean value (BV).

2. Method according to claim 1, **characterized in that** the first sensor signal (SS-1) contains first acceleration signals (ACS-1) generated by an accelerometer or an accelerometer and a gyroscope due to measuring acceleration forces on all three physical axes <"x, y, z"> being exerted on the Smart Personal Communication Device (SPCD) and
the second sensor signal (SS-2) contains second acceleration signals (ACS-2) generated by an accelerometer or an accelerometer and a gyroscope due to measuring acceleration forces on all three physical axes <"x, y, z"> being exerted on the vehicle (VEH).

3. Method according to claim 1 or 2, in particular to claim 2, **characterized in that**
the Metrification (MEF) is constituted by at least one of three different metrics (M1, M2, M3),

- a first metric (M1) defining a "Peak-to-Root Mean Square [RMS]"-Ratio (PRMSR) of a "Windowed Cross-Correlation [WCC]"-function, whereby the "Root Mean Square [RMS]" of the WCC-function is called "Cross-Correlation Energy [CCE]",
- a second metric (M2) defining a "Peak Lag Value with the highest percentage of all Peak Lag Values over all "Cross-Correlation Windows"" called as "Correlation Lag Ratio" (CLR), and
- a third metric (M3) defining a "ratio of a largest part of "Cross-Correlation Energy [CCE]"to a remainder of the "Cross-Correlation Energy [CCE]" over all "Cross-Correlation Windows"" called as "RMS-to-RMS Ratio" (RRR).

4. Method according to claim 3 referring back to claim 2, **characterized in that**
the first metric (M1), the second metric (M2) and the third metric (M3) are adapted to determine, in the case of the "YES"-statement (Y-S) regarding the presence of the passenger (PAS) in the vehicle (VEH) and the existence of the acceleration signals (ACS), two different types of the vehicles (VEH),

- a first vehicle type such as a suburban train, on which small acceleration forces on all three physical axes <"x, y, z"> are exerted, and
- a second vehicle type such as a bus or taxi cab, on which significantly larger acceleration forces on all three physical axes <"x, y, z"> are exerted,
such that,
- if the at least one of the three different metrics is the third metric (M3) and the third metric (M3) equals or is above the overall threshold value (THV), the first vehicle type is determined and
- if two of the at least one three different metrics are the first metric (M1) and the second metric (M2) and both the first metric (M1) and the second metric (M2) equal or are above the overall threshold value (THV), the second vehicle type is determined.

5. Method according to one of the claims 1 to 4, **characterized in that**
the threshold value (THV) is at least one of arbitrary and determined experimentally or automatically.

6. Method according to one of the claims 1 to 5, **characterized by**
using for a "BIBO"-based electronic ticketing.

7. Method according to one of the claims 1 to 6, **characterized in that**

the vehicle (VEH) is a public transport vehicle such as bus, train, city-/urban railway, underground/subway, tramway, taxi cab or airplane etc.

**8.** Method according to claim 1, **characterized in that** the first sensor signal (SS-1) is a first pressure signal (PRS-1) generated by a pressure sensor, a first relative humidity and temperature signal (HTS-1) generated by a relative humidity sensor and a temperature sensor, a first magnetic field signal (MFS-1) generated by a magnetic field sensor or a first "Inertial Measurement Unit"-signal (IMUS-1) generated by an "Inertial Measurement Unit" and
the second sensor signal (SS-2) is correspondingly a second pressure signal (PRS-2) generated by a pressure sensor, a second relative humidity and temperature signal (HTS-2) generated by a relative humidity sensor and a temperature sensor, a second magnetic field signal (MFS-2) generated by a magnetic field sensor or a second "Inertial Measurement Unit"-signal (IMUS-2) generated by an "Inertial Measurement Unit".

**9.** Digital Tool (DT) for presence detection inside a vehicle (VEH) of a passenger (PAS) using a Smart Personal Communication Device (SPCD), in particular a smartphone, by which at least one passenger-related first sensor signal (SS-1) of the Smart Personal Communication Device (SPCD) is compared with at least one vehicle-related second sensor signal (SS-2) of the vehicle (VEH), in particular of a Vehicular Gateway (VGW) in the vehicle (VEH), such that a simple "YES"-Statement (Y-S) or NO"-Statement (N-S) regarding the presence of the passenger (PAS) in the vehicle (VEH) is made,
**characterized by**
a program module (PGM) for data processing, which is executable on a processor (PRC), in particular a processor (PRC) of the Smart Personal Communication Device (SPCD) or the Vehicular Gateway (VGW) in the vehicle (VEH), and designed such that:

(**a**) In a Signal Pre-Processing Step (SPPS) the first and second sensor signals (SS-1, SS-2) are independently pre-processed each by executing at least a Re-Sampling (RS) and a Magnitude Calculation (MC) to induce signal-specific magnitude values (MV-1, MV-2), which in particular are pre-processed additionally each by executing a Clipping Detection (CD) being executed preferably between the Re-Sampling (RS) and the Magnitude Calculation (MC),
(**b**) in a Vehicle Identification Step (VIS)

(**b1**) the signal-specific magnitude values (MV-1, MV-2) are compared by applying a "Cross-Correlation Function [CCF]" such that the signal-specific magnitude values (MV-1, MV-2) are executed in the order of "Overlapping in Time Domain" (OTD), "Windowed Cross-Correlation" (WCC) and Metrification (MEF) to induce due to the Metrification (MEF) at least one metrification-based identification value (IDV, IDV-1, IDV-2, IDV-3) and
(**b2**) the at least one metrification-based identification value (IDV, IDV-1, IDV-2, IDV-3) is compared each with an overall threshold value (THV) such that (IDF), if one of the at least one metrification-based identification value (IDV, IDV-1, IDV-2, IDV-3) is below or below and equal to the threshold value (THV), the "NO"-statement (N-S) regarding the presence of the passenger (PAS) in the vehicle (VEH) is made otherwise the "YES"-statement (Y-S) regarding the presence of the passenger (PAS) in the vehicle (VEH) is made, whereby in particular an output quantity (OQ) is provided correspondingly, which is preferably a Boolean value (BV).

**10.** Digital Tool (DT) according to claim 9, **characterized in that**
the first sensor signal (SS-1) contains first acceleration signals (ACS-1) generated by an accelerometer or an accelerometer and a gyroscope due to measuring acceleration forces on all three physical axes <"x, y, z"> being exerted on the Smart Personal Communication Device (SPCD) and
the second sensor signal (SS-2) contains second acceleration signals (ACS-2) generated by an accelerometer or an accelerometer and a gyroscope due to measuring acceleration forces on all three physical axes <"x, y, z"> being exerted on the vehicle (VEH).

**11.** Digital Tool (DT) according to claim 9 or 10, in particular to claim 10, **characterized in that**
the program module (PGM) being executable on the processor (PRC) is designed such that the Metrification (MEF) is constituted by at least one of three different metrics (M1, M2, M3),

- a first metric (M1) defining a "Peak-to-Root Mean Square [RMS] "-Ratio (PRMSR) of a "Windowed Cross-Correlation [WCC]"-function, whereby the "Root Mean Square [RMS]" of the WCC-function is called "Cross-Correlation Energy [CCE]",
- a second metric (M2) defining a "Peak Lag Value with the highest percentage of all Peak Lag Values over all "Cross-Correlation Windows"" called as "Correlation Lag Ratio" (CLR),
and
- a third metric (M3) defining a "ratio of a largest part of "Cross-Correlation Energy [CCE]"to a remainder of the "Cross-Correlation Energy [CCE]" over all "Cross-Correlation Windows"" called as "RMS-to-RMS Ratio" (RRR).

**12.** Digital Tool (DT) according to claim 11 referring back to claim 10, **characterized in that** the program module (PGM) being executable on the processor (PRC) is designed such that the first metric (M1), the second metric (M2) and the third metric (M3) are adapted to determine, in the case of the "YES"-statement (Y-S) regarding the presence of the passenger (PAS) in the vehicle (VEH) and the existence of the acceleration signals (ACS), two different types of the vehicles (VEH),

- a first vehicle type such as a suburban train, on which small acceleration forces on all three physical axes <"x, y, z"> are exerted, and
- a second vehicle type such as a bus or taxi cab, on which significantly larger acceleration forces on all three physical axes <"x, y, z"> are exerted,

such that,

- if the at least one of the three different metrics is the third metric (M3) and the third metric (M3) equals or is above the overall threshold value (THV), the first vehicle type is determined and
- if two of the at least one three different metrics are the first metric (M1) and the second metric (M2) and both the first metric (M1) and the second metric (M2) equal or are above the overall threshold value (THV), the second vehicle type is determined.

**13.** Digital Tool (DT) according to one of the claims 9 to 12, **characterized in that** the program module (PGM) being executable on the processor (PRC) is designed such that the threshold value (THV) is at least one of arbitrary and determined experimentally or automatically.

**14.** Digital Tool (DT) according to one of the claims 9 to 13, **characterized by** using for a "BIBO"-based electronic ticketing.

**15.** Digital Tool (DT) according to one of the claims 9 to 14, **characterized in that** the vehicle (VEH) is a public transport vehicle such as bus, train, city-/urban railway, underground/subway, tramway, taxi cab or airplane etc.

**16.** Digital Tool (DT) according to claim 9, **characterized in that** the first sensor signal (SS-1) is a first pressure signal (PRS-1) generated by a pressure sensor, a first relative humidity and temperature signal (HTS-1) generated by a relative humidity sensor and a temperature sensor, a first magnetic field signal (MFS-1) generated by a magnetic field sensor or a first "Inertial Measurement Unit"-signal (IMUS-1) generated by an "Inertial Measurement Unit" and the second sensor signal (SS-2) is correspondingly a second pressure signal (PRS-2) generated by a pressure sensor, a second relative humidity and temperature signal (HTS-2) generated by a relative humidity sensor and a temperature sensor, a second magnetic field signal (MFS-2) generated by a magnetic field sensor or a second "Inertial Measurement Unit"-signal (IMUS-2) generated by an "Inertial Measurement Unit".

**17.** Digital Tool (DT) according to one of the claims 9 to 16, **characterized by** being downloadable from a server or cloud.

**18.** Digital Tool (DT) according to one of the claims 9 to 17, **characterized by** being uploadable via a USB-stick.

**19.** Smart Personal Communication Device (SPCD) for presence detection inside a vehicle (VEH) of a passenger (PAS) using the Device (SPCD), in particular a smartphone, including a processor (PRC) with a computer-readable storage media (STM) by which at least one passenger-related first sensor signal (SS-1) of the Device (SPCD) is compared with at least one vehicle-related second sensor signal (SS-2) of the vehicle (), in particular of a Vehicular Gateway (VGW) in the vehicle (VEH), such that a simple "YES"-Statement (Y-S) or NO"-Statement (N-S) regarding the presence of the passenger (PAS) in the vehicle (VEH) is made,
**characterized in that**
the processor (PRC) executes for the presence detection a program module (PGM) for data processing, which is stored or uploadable or downloadable into the storage media (STM), such that:

(**a**) In a Signal Pre-Processing Step (SPPS) the first and second sensor signals (SS-1, SS-2) are independently pre-processed each by executing at least a Re-Sampling (RS) and a Magnitude Calculation (MC) to induce signal-specific magnitude values (MV-1, MV-2), which in particular are pre-processed additionally each by executing a Clipping Detection (CD) being executed preferably between the Re-Sampling (RS) and the Magnitude Calculation (MC),
(**b**) in a Vehicle Identification Step (VIS)

(**b1**) the signal-specific magnitude values (MV-1, MV-2) are compared by applying a "Cross-Correlation Function [CCF]" such that the signal-specific magnitude values (MV-1, MV-2) are executed in the order of "Overlapping in Time Domain" (OTD), "Windowed Cross-Correlation" (WCC) and Metrification (MEF) to induce due to the Metrification (MEF) at least one metrification-based identification value (IDV, IDV-1, IDV-2, IDV-3) and

(**b2**) the at least one metrification-based identification value (IDV, IDV-1, IDV-2, IDV-3) is compared each with an overall threshold value (THV) such that (IDF), if one of the at least one metrification-based identification value (IDV, IDV-1, IDV-2, IDV-3) is below or below and equal to the threshold value (THV), the "NO"-statement (N-S) regarding the presence of the passenger (PAS) in the vehicle (VEH) is made otherwise the "YES"-statement (Y-S) regarding the presence of the passenger (PAS) in the vehicle (VEH) is made, whereby in particular an output quantity (OQ) is provided correspondingly, which is preferably a Boolean value (BV).

**20.** Device (SPCD) according to claim 19, **characterized by**

- a sensor (SE) for generating the first sensor signal (SS-1), which is connected to the processor (PRC), designed as an accelerometer or an accelerometer and a gyroscope generating first acceleration signals (ACS-1) due to measuring acceleration forces on all three physical axes <"x, y, z"> being exerted on the Device (SPCD) and
- a transceiver unit (TRU), which is connected to the processor (PRC), receiving as the second sensor signal (SS-2) second acceleration signals (ACS-2) generated due to measuring acceleration forces on all three physical axes <"x, y, z"> being exerted on the vehicle (VEH).

**21.** Device (SPCD) according to claim 19 or 20, in particular to claim 20, **characterized in that** the processor (PRC) executes the program module (PGM) for the presence detection such that the Metrification (MEF) is constituted by at least one of three different metrics (M1, M2, M3),

- a first metric (M1) defining a "Peak-to-Root Mean Square [RMS] "-Ratio (PRMSR) of a "Windowed Cross-Correlation [WCC]"-function, whereby the "Root Mean Square [RMS]" of the WCC-function is called "Cross-Correlation Energy [CCE]",
- a second metric (M2) defining a "Peak Lag Value with the highest percentage of all Peak Lag Values over all "Cross-Correlation Windows"" called as "Correlation Lag Ratio" (CLR), and
- a third metric (M3) defining a "ratio of a largest part of "Cross-Correlation Energy [CCE]"to a remainder of the "Cross-Correlation Energy [CCE]" over all "Cross-Correlation Windows"" called as "RMS-to-RMS Ratio" (RRR).

**22.** Device (SPCD) according to claim 21 referring back to claim 20, **characterized in that** the processor (PRC) executes the program module (PGM) for the presence detection such that the first metric (M1), the second metric (M2) and the third metric (M3) are adapted to determine, in the case of the "YES"-statement (Y-S) regarding the presence of the passenger (PAS) in the vehicle (VEH) and the existence of the acceleration signals (ACS), two different types of the vehicles (VEH),

- a first vehicle type such as a suburban train, on which small acceleration forces on all three physical axes <"x, y, z"> are exerted, and
- a second vehicle type such as a bus or taxi cab, on which significantly larger acceleration forces on all three physical axes <"x, y, z"> are exerted,

such that,

- if the at least one of the three different metrics is the third metric (M3) and the third metric (M3) equals or is above the overall threshold value (THV), the first vehicle type is determined and
- if two of the at least one three different metrics are the first metric (M1) and the second metric (M2) and both the first metric (M1) and the second metric (M2) equal or are above the overall threshold value (THV), the second vehicle type is determined.

**23.** Device (SPCD) according to one of the claims 19 to 22, **characterized in that** the processor (PRC) executes the program module (PGM) for the presence detection such that the threshold value (THV) is at least one of arbitrary and determined experimentally or automatically.

**24.** Device (SPCD) according to one of the claims 19 to 23, **characterized by** using for a "BIBO"-based electronic ticketing.

**25.** Device (SPCD) according to one of the claims 19 to 24, **characterized in that** the vehicle (VEH) is a public transport vehicle such as bus, train, city-/urban railway, underground/subway, tramway, taxi cab or airplane etc.

**26.** Device (SPCD) according to claim 18, **characterized by**

- a sensor (SE) for generating the first sensor signal (SS-1), which is connected to the processor (PRC), designed as a pressure sensor generating a first pressure signal (PRS-1), a relative humidity sensor and temperature sensor generating a first relative humidity and temperature signal (HTS-1), a magnetic field sensor generating a first magnetic field signal (MFS-1) or an "Inertial Measurement Unit"-sensor generating a first "Inertial Measurement Unit"-signal (IMUS-1), and

- a transceiver unit (TRU), which is connected to the processor (PRC), receiving as the second sensor signal (SS-2) each correspondingly a second pressure signal (PRS-2) generated by a further pressure sensor, a second relative humidity and temperature signal (HTS-2) generated by a further relative humidity sensor and a further temperature sensor, a second magnetic field signal (MFS-2) generated by a further magnetic field sensor or a second "Inertial Measurement Unit"-signal (IMUS-2) generated by a further "Inertial Measurement Unit".

**27.** Vehicular Gateway (VGW) for presence detection inside a vehicle (VEH) of a passenger (PAS) using a Smart Personal Communication Device (SPCD), in particular a smartphone, including a processor (PRC) with a computer-readable storage media (STM) by which at least one passenger-related first sensor signal (SS-1) of the Smart Personal Communication Device (SPCD) (SPCD) is compared with at least one vehicle-related second sensor signal (SS-2) of the vehicle (), in particular of the Vehicular Gateway (VGW) in the vehicle (VEH), such that a simple "YES"-Statement (Y-S) or NO"-Statement (N-S) regarding the presence of the passenger (PAS) in the vehicle (VEH) is made,
**characterized in that**
the processor (PRC) executes for the presence detection a program module (PGM) for data processing, which is stored or uploadable or downloadable into the storage media (STM), such that:

(**a**) In a Signal Pre-Processing Step (SPPS) the first and second sensor signals (SS-1, SS-2) are independently pre-processed each by executing at least a Re-Sampling (RS) and a Magnitude Calculation (MC) to induce signal-specific magnitude values (MV-1, MV-2), which in particular are pre-processed additionally each by executing a Clipping Detection (CD) being executed preferably between the Re-Sampling (RS) and the Magnitude Calculation (MC),
(**b**) in a Vehicle Identification Step (VIS)

(**b1**) the signal-specific magnitude values (MV-1, MV-2) are compared by applying a "Cross-Correlation Function [CCF]" such that the signal-specific magnitude values (MV-1, MV-2) are executed in the order of "Overlapping in Time Domain" (OTD), "Windowed Cross-Correlation" (WCC) and Metrification (MEF) to induce due to the Metrification (MEF) at least one metrification-based identification value (IDV, IDV-1, IDV-2, IDV-3) and
(**b2**) the at least one metrification-based identification value (IDV, IDV-1, IDV-2, IDV-3) is compared each with an overall threshold value (THV) such that (IDF), if one of the at least one metrification-based identification value (IDV, IDV-1, IDV-2, IDV-3) is below or below and equal to the threshold value (THV), the "NO"-statement (N-S) regarding the presence of the passenger (PAS) in the vehicle (VEH) is made otherwise the "YES"-statement (Y-S) regarding the presence of the passenger (PAS) in the vehicle (VEH) is made, whereby in particular an output quantity (OQ) is provided correspondingly, which is preferably a Boolean value (BV).

**28.** Vehicular Gateway (VGW) according to claim 27, **characterized by**

- a sensor (SE) for generating the second sensor signal (SS-2), which is connected to the processor (PRC), designed as an accelerometer or an accelerometer and a gyroscope generating second acceleration signals (ACS-2) due to measuring acceleration forces on all three physical axes <"x, y, z"> being exerted on the vehicle (VEH) and
- a transceiver unit (TRU), which is connected to the processor (PRC), receiving as the first sensor signal (SS-1) first acceleration signals (ACS-1) generated due to measuring acceleration forces on all three physical axes <"x, y, z"> being exerted on the Device (SPCD).

**29.** Vehicular Gateway (VGW) according to claim 27 or 28, in particular to claim 28, **characterized in that** the processor (PRC) executes the program module (PGM) for the presence detection such that the Metrification (MEF) is constituted by at least one of three different metrics (M1, M2, M3),

- a first metric (M1) defining a "Peak-to-Root Mean Square [RMS] "-Ratio (PRMSR) of a "Windowed Cross-Correlation [WCC]"-function, whereby the "Root Mean Square [RMS]" of the WCC-function is called "Cross-Correlation Energy [CCE]",
- a second metric (M2) defining a "Peak Lag Value with the highest percentage of all Peak Lag Values over all "Cross-Correlation Windows""

called as "Correlation Lag Ratio" (CLR), and
- a third metric (M3) defining a "ratio of a largest part of "Cross-Correlation Energy [CCE]"to a remainder of the "Cross-Correlation Energy [CCE]" over all "Cross-Correlation Windows"" called as "RMS-to-RMS Ratio" (RRR).

**30.** Vehicular Gateway (VGW) according to claim 29 referring back to claim 28, **characterized in that** the processor (PRC) executes the program module (PGM) for the presence detection such that the first metric (M1), the second metric (M2) and the third metric (M3) are adapted to determine, in the case of the "YES"-statement (Y-S) regarding the presence of the passenger (PAS) in the vehicle (VEH) and the existence of the acceleration signals (ACS), two different types of the vehicles (VEH),

- a first vehicle type such as a suburban train, on which small acceleration forces on all three physical axes <"x, y, z"> are exerted, and
- a second vehicle type such as a bus or taxi cab, on which significantly larger acceleration forces on all three physical axes <"x, y, z"> are exerted,
such that,
- if the at least one of the three different metrics is the third metric (M3) and the third metric (M3) equals or is above the overall threshold value (THV), the first vehicle type is determined and
- if two of the at least one three different metrics are the first metric (M1) and the second metric (M2) and both the first metric (M1) and the second metric (M2) equal or are above the overall threshold value (THV), the second vehicle type is determined.

**31.** Vehicular Gateway (VGW) according to one of the claims 27 to 30, **characterized in that** the processor (PRC) executes the program module (PGM) for the presence detection such that the threshold value (THV) is at least one of arbitrary and determined experimentally or automatically.

**32.** Vehicular Gateway (VGW) according to one of the claims 27 to 31, **characterized by** using for a "BIBO"-based electronic ticketing.

**33.** Vehicular Gateway (VGW) according to one of the claims 27 to 32, **characterized in that** the vehicle (VEH) is a public transport vehicle such as bus, train, city-/urban railway, underground/subway, tramway, taxi cab or airplane etc.

**34.** Vehicular Gateway (VGW) according to claim 27, **characterized by**

- a sensor (SE) for generating the second sensor signal (SS-2), which is connected to the processor (PRC), designed as a pressure sensor generating a second pressure signal (PRS-2), a relative humidity sensor and temperature sensor generating a second relative humidity and temperature signal (HTS-2), a magnetic field sensor generating a second magnetic field signal (MFS-2) or an "Inertial Measurement Unit"-sensor generating a second "Inertial Measurement Unit"-signal (IMUS-2), and
- a transceiver unit (TRU), which is connected to the processor (PRC), receiving as the first sensor signal (SS-1) each correspondingly a first pressure signal (PRS-1) generated by a further pressure sensor, a first relative humidity and temperature signal (HTS-1) generated by a further relative humidity sensor and a further temperature sensor, a first magnetic field signal (MFS-1) generated by a further magnetic field sensor or a first "Inertial Measurement Unit"-signal (IMUS-1) generated by a further "Inertial Measurement Unit".

**35.** BIBO-System for presence detection inside a vehicle (VEH) of a passenger (PAS) using a Smart Personal Communication Device (SPCD), in particular a smartphone, by which at least one passenger-related first sensor signal (SS-1) of the Smart Personal Communication Device (SPCD) is compared with at least one vehicle-related second sensor signal (SS-2) of the vehicle (VEH), in particular of a Vehicular Gateway (VGW) in the vehicle (VEH), such that a simple "YES"-Statement (Y-S) or NO"-Statement (N-S) regarding the presence of the passenger (PAS) in the vehicle (VEH) is made,
**characterized by**
a communication link (COL) between a Vehicular Gateway (VGW) and the Smart Personal Communication Device (SPCD), whereby for the presence detection at least one of Vehicular Gateway (VGW) and the Smart Personal Communication Device (SPCD) are designed as given to one of the claims 27 to 34 respectively the claims 19 to 26 and comprise in particular a Digital Tool according to one of the claims 9 to 18 for carrying out the Method according to one of the claims 1 to 8.

**Patentansprüche**

**1.** Verfahren zur Detektion der Anwesenheit eines Passagiers (PAS) in einem Fahrzeug (VEH) mit Hilfe einer intelligenten persönlichen Kommunikationsvorrichtung (Smart Personal Communication Device; SPCD), insbesondere eines Smartphones, mit dem mindestens ein passagierbezogenes erstes Sensorsignal (SS-1) der intelligenten persönlichen Kommunikationsvorrichtung (SPCD) mit mindestens einem fahrzeugbezogenen zweiten Sensorsignal (SS-2) des Fahrzeugs (VEH) verglichen wird, insbesondere einem Fahrzeug-Gateway (Vehicular Gateway; VGW) in dem Fahrzeug (VEH), so dass eine einfache "JA"-Aussage (Y-S) oder "NEIN"-Aussage (N-S) in Bezug auf die Anwesenheit des Passagiers (PAS) in dem Fahrzeug (VEH) getroffen wird,

**dadurch gekennzeichnet, dass**

**(a)** in einem Signal-Vorverarbeitungsschritt (Signal Pre-Processing Step; SPPS) das erste und zweite Sensorsignal (SS-1, SS-2) unabhängig voneinander vorverarbeitet werden, indem mindestens eine Neuabtastung (Re-Sampling; RS) und eine Größenberechnung (Magnitude Calculation; MC) durchgeführt werden, um signalspezifische Größenwerte (MV-1, MV-2) zu induzieren, die im Speziellen jeweils zusätzlich vorverarbeitet werden, indem eine Ausschnitterfassung (Clipping Detection; CD) durchgeführt wird, die vorzugsweise zwischen der Neuabtastung (RS) und der Größenberechnung (MC) vorgenommen wird,

**(b)** in einem Fahrzeugidentifizierungsschritt (Vehicle Identification Step; VIS)

**(b1)** die signalspezifischen Größenwerte (MV-1, MV-2) durch Anwendung einer "Kreuzkorrelationsfunktion" (Cross-Correlation Function [CCF]) verglichen werden, so dass die signalspezifischen Größenwerte (MV-1, MV-2) in der Reihenfolge "Überlappung in Zeitdomäne" (Overlapping in Time Domain; OTD), "Fensterbasierte Kreuzkorrelation" (Windowed Cross-Correlation; WCC) und Metrifikation (Metrification; MEF) ausgeführt werden, um infolge der Metrifikation (MEF) mindestens einen metrifikationsbasierten Identifizierungswert (IDV, IDV-1, IDV-2, IDV-3) zu induzieren, und

**(b2)** der mindestens eine metrifikationsbasierte Identifizierungswert (IDV, IDV-1, IDV-2, IDV-3) jeweils mit einem Gesamtschwellenwert (THV) verglichen wird, so dass (IDF), wenn einer des mindestens einen metrifikationsbasierten Identifizierungswerts (IDV, IDV-1, IDV-2, IDV-3) kleiner als oder kleiner und gleich dem Schwellenwert (THV) ist, die "NEIN"-Aussage (N-S) bezüglich der Anwesenheit des Passagiers (PAS) in dem Fahrzeug (VEH) erfolgt, andernfalls die "JA"-Aussage (Y-S) bezüglich der Anwesenheit des Passagiers (PAS) in dem Fahrzeug (VEH) erfolgt, wobei insbesondere eine entsprechende Ausgabemenge (OQ) bereitgestellt wird, die vorzugsweise ein boolescher Wert (BV) ist.

**2.** Verfahren nach Anspruch 1, **dadurch gekennzeichnet, dass** das erste Sensorsignal (SS-1) erste Beschleunigungssignale (ACS-1) enthält, erzeugt von einem Beschleunigungsmesser oder einem Beschleunigungsmesser und einem Gyroskop aufgrund des Messens von Beschleunigungskräften, die in allen drei physikalischen Achsen <"x, y, z"> auf die intelligente persönliche Kommunikationsvorrichtung (SPCD) ausgeübt werden, und
das zweite Sensorsignal (SS-2) zweite Beschleunigungssignale (ACS-2) enthält, erzeugt von einem Beschleunigungsmesser oder einem Beschleunigungsmesser und einem Gyroskop aufgrund des Messens von Beschleunigungskräften, die in allen drei physikalischen Achsen <"x, y, z"> auf das Fahrzeug (VEH) ausgeübt werden.

**3.** Verfahren nach Anspruch 1 oder 2, im Speziellen nach Anspruch 2, **dadurch gekennzeichnet, dass** die Metrifikation (MEF) durch mindestens eine von drei unterschiedlichen Metriken (Ml, M2, M3) dargestellt wird,

- eine erste Metrik (M1), die ein "Spitze-Effektivwert" (Peakto-Root Mean Square [RMS])-Verhältnis (PRMSR) einer "Fensterbasierten Kreuzkorrelation [WCC]"-Funktion definiert, wobei der "Effektivwert" (Root Mean Square [RMS]) der WCC-Funktion als "Kreuzkorrelationsenergie" (Cross-Correlation Energy [CCE]) bezeichnet wird,
- eine zweite Metrik (M2), die einen "Spitze-Nacheilwert mit dem höchsten Prozentsatz aller Spitze-Nacheilwerte über alle "Kreuzkorrelationsfenster"" (Peak Lag Value with the highest percentage of all Peak Lag Values over all "Cross- Correlation Windows") definiert, bezeichnet als "Korrelation-Nacheil-Verhältnis" (Correlation Lag Ratio; CLR), und
- eine dritte Metrik (M3), die ein "Verhältnis eines größten Teils einer Kreuzkorrelationsenergie [CCE]" zu einem Rest der "Kreuzkorrelationsenergie [CCE]" über alle "Kreuzkorrelationsfenster"" definiert, bezeichnet als "RMS-zu-RMS-Verhältnis" (RMS-to-RMS Ratio; RRR).

**4.** Verfahren nach Anspruch 3, zurückverweisend auf Anspruch 2,
**dadurch gekennzeichnet, dass**
die erste Metrik (M1), die zweite Metrik (M2) und die dritte Metrik (M3) dafür ausgelegt sind, im Fall der "JA"-Aussage (Y-S) bezüglich der Anwesenheit des Passagiers (PAS) in dem Fahrzeug (VEH) und dem Vorhandensein der Beschleunigungssignale (ACS) zwei verschiedene Arten von Fahrzeugen (VEH) zu ermitteln,

- eine erste Fahrzeugart, wie beispielsweise ein Vorortzug, bei der geringe Beschleunigungskräfte auf alle drei physikalischen Achsen <"x, y, z"> ausgeübt werden, und
- eine zweite Fahrzeugart, wie beispielsweise ein Bus oder ein Taxi, bei der deutlich größere Beschleunigungskräfte auf alle drei physikalischen Achsen <"x, y, z"> ausgeübt werden,
so dass,
- wenn die mindestens eine der drei unterschiedlichen Metriken die dritte Metrik (M3) ist und die dritte Metrik (M3) gleich oder größer als der Gesamtschwellenwert (THV) ist, die erste Fahrzeugart ermittelt wird, und
- wenn zwei der mindestens drei unterschiedlichen Metriken die erste Metrik (M1) und die zweite Metrik (M2) sind und sowohl die erste Metrik (M1) als auch die zweite Metrik (M2) gleich oder größer als der Gesamtschwellenwert (THV) sind, die zweite Fahrzeugart ermittelt wird.

**5.** Verfahren nach einem der Ansprüche 1 bis 4, **dadurch gekennzeichnet, dass**
der Schwellenwert (THV) zumindest eines von willkürlich und experimentell oder automatisch ermittelt wird.

**6.** Verfahren nach einem der Ansprüche 1 bis 5, **gekennzeichnet durch**
das Verwenden einer "BIBO"-basierten elektronischen Buchung.

**7.** Verfahren nach einem der Ansprüche 1 bis 6, **dadurch gekennzeichnet, dass**
das Fahrzeug (VEH) ein öffentliches Transportfahrzeug wie ein Bus, ein Zug, eine Stadtbahn, eine U-Bahn, eine Straßenbahn, ein Taxi oder ein Flugzeug usw. ist.

**8.** Verfahren nach Anspruch 1, **dadurch gekennzeichnet, dass** das erste Sensorsignal (SS-1) ein erstes Drucksignal (PRS-1) ist, erzeugt von einem Drucksensor, ein erstes Relativfeuchte- und Temperatursignal (HTS-1) ist, erzeugt von einem Relativfeuchtesensor und einem Temperatursensor, ein erstes Magnetfeldsignal (MFS-1) ist, erzeugt von einem Magnetfeldsensor, oder ein erstes "Inertial-Messeinheit" (Inertial Measurement Unit)-Signal (IMUS-1) ist, erzeugt von einer "Inertial-Messeinheit", und
das zweite Sensorsignal (SS-2) entsprechend ein zweites Drucksignal (PRS-2) ist, erzeugt von einem Drucksensor, ein zweites Relativfeuchte- und Temperatursignal (HTS-2) ist, erzeugt von einem Relativfeuchtesensor und einem Temperatursensor, ein zweites Magnetfeldsignal (MFS-2) ist, erzeugt von einem Magnetfeldsensor, oder ein zweites "Inertial-Messeinheit" (Inertial Measurement Unit)-Signal (IMUS-2) ist, erzeugt von einer "Inertial-Messeinheit".

**9.** Digitalinstrument (DT) zur Detektion der Anwesenheit eines Passagiers (PAS) in einem Fahrzeug (VEH) mithilfe einer intelligenten persönlichen Kommunikationsvorrichtung (Smart Personal Communication Device; SPCD), insbesondere eines Smartphones, mit dem mindestens ein passagierbezogenes erstes Sensorsignal (SS-1) der intelligenten persönlichen Kommunikationsvorrichtung (SPCD) mit mindestens einem fahrzeugbezogenen zweiten Sensorsignal (SS-2) des Fahrzeugs (VEH) verglichen wird, insbesondere einem Fahrzeug-Gateway (Vehicular Gateway; VGW) in dem Fahrzeug (VEH), so dass eine einfache "JA"-Aussage (Y-S) oder "NEIN"-Aussage (N-S) in Bezug auf die Anwesenheit des Passagiers (PAS) in dem Fahrzeug (VEH) getroffen wird,
**gekennzeichnet durch**
ein Programmmodul (PGM) zur Datenverarbeitung, das auf einem Prozessor (PRC) ausführbar ist, insbesondere einem Prozessor (PRC) der intelligenten persönlichen Kommunikationsvorrichtung (SPCD) oder dem Fahrzeug-Gateway (VGW) in dem Fahrzeug (VEH), und derartig ausgelegt ist, dass:

**(a)** in einem Signal-Vorverarbeitungsschritt (Signal Pre-Processing Step; SPPS) das erste und zweite Sensorsignal (SS-1, SS-2) unabhängig voneinander vorverarbeitet werden, indem mindestens eine Neuabtastung (Re-Sampling; RS) und eine Größenberechnung (Magnitude Calculation; MC) durchgeführt werden, um signalspezifische Größenwerte (MV-1, MV-2) zu induzieren, die im Speziellen jeweils zusätzlich vorverarbeitet werden, indem eine Ausschnitterfassung (Clipping Detection; CD) durchgeführt wird, die vorzugsweise zwischen der Neuabtastung (RS) und der Größenberechnung (MC) vorgenommen wird,
**(b)** in einem Fahrzeugidentifizierungsschritt (Vehicle Identification Step; VIS)

**(b1)** die signalspezifischen Größenwerte (MV-1, MV-2) durch Anwendung einer "Kreuzkorrelationsfunktion" (Cross-Correlation Function [CCF]) verglichen werden, so dass die signalspezifischen Größenwerte (MV-1, MV-2) in der Reihenfolge "Überlappung in Zeitdomäne" (Overlapping in Time Domain; OTD), "Fensterbasierte Kreuzkorrelation" (Windowed Cross-Correlation; WCC) und Metrifikation (Metrification; MEF) ausgeführt werden, um infolge der Metrifikation (MEF) mindestens einen metrifikationsbasierten Identifizierungswert (IDV, IDV-1, IDV-2, IDV-3) zu induzieren, und

**(b2)** der mindestens eine metrifikationsbasierte Identifizierungswert (IDV, IDV-1, IDV-2, IDV-3) jeweils mit einem Gesamtschwellenwert (THV) verglichen wird, so dass (IDF), wenn einer des mindestens einen metrifikationsbasierten Identifizierungswerts (IDV, IDV-1, IDV-2, IDV-3) kleiner als oder kleiner und gleich dem Schwellenwert (THV) ist, die "NEIN"-Aussage (N-S) bezüglich der Anwesenheit des Passagiers (PAS) in dem Fahrzeug (VEH) erfolgt, andernfalls die "JA"-Aussage (Y-S) bezüglich der Anwesenheit des Passagiers (PAS) in dem Fahrzeug (VEH) erfolgt, wobei insbesondere eine entsprechende Ausgabemenge (OQ) bereitgestellt wird, die vorzugsweise ein boolescher Wert (BV) ist.

**10.** Digitalinstrument (DT) nach Anspruch 9, **dadurch gekennzeichnet, dass**
das erste Sensorsignal (SS-1) erste Beschleunigungssignale (ACS-1) enthält, erzeugt von einem Beschleunigungsmesser oder einem Beschleunigungsmesser und einem Gyroskop aufgrund des Messens von Beschleunigungskräften, die in allen drei physikalischen Achsen <"x, y, z"> auf die intelligente persönliche Kommunikationsvorrichtung (SPCD) ausgeübt werden, und
das zweite Sensorsignal (SS-2) zweite Beschleunigungssignale (ACS-2) enthält, erzeugt von einem Beschleunigungsmesser oder einem Beschleunigungsmesser und einem Gyroskop aufgrund des Messens von Beschleunigungskräften, die in allen drei physikalischen Achsen <"x, y, z"> auf das Fahrzeug (VEH) ausgeübt werden.

**11.** Digitalinstrument (DT) nach Anspruch 9 oder 10, im Speziellen nach Anspruch 10, **dadurch gekennzeichnet, dass** das auf dem Prozessor (PRC) ausführbare Programmmodul (PGM) derartig ausgelegt ist, dass die Metrifikation (MEF) durch mindestens eine der drei unterschiedlichen Metriken (Ml, M2, M3) dargestellt wird,

- eine erste Metrik (M1), die ein "Spitze-Effektivwert"-Verhältnis (PRMSR) einer "Fensterbasierten Kreuzkorrelation [WCC]"-Funktion definiert, wobei der "Effektivwert [RMS]" der WCC-Funktion als "Kreuzkorrelationsenergie [CCE]" bezeichnet wird,
- eine zweite Metrik (M2), die einen "Spitze-Nacheilwert mit dem höchsten Prozentsatz aller Spitze-Nacheilwerte über alle "Kreuzkorrelationsfenster"" (Peak Lag Value with the highest percentage of all Peak Lag Values over all "Cross- Correlation Windows") definiert, bezeichnet als "Korrelation-Nacheil-Verhältnis" (Correlation Lag Ratio; CLR), und
- eine dritte Metrik (M3), die ein "Verhältnis eines größten Teils einer Kreuzkorrelationsenergie [CCE]" zu einem Rest der "Kreuzkorrelationsenergie [CCE]" über alle "Kreuzkorrelationsfenster"" definiert, bezeichnet als "RMS-zu-RMS-Verhältnis" (RMS-to-RMS Ratio; RRR).

**12.** Digitalinstrument (DT) nach Anspruch 11, zurückverweisend auf Anspruch 10, **dadurch gekennzeichnet, dass**
das auf dem Prozessor (PRC) ausführbare Programmmodul (PGM) so konzipiert ist, dass die erste Metrik (M1), die zweite Metrik (M2) und die dritte Metrik (M3) im Fall der "JA"-Aussage (Y-S) bezüglich der Anwesenheit des Passagiers (PAS) in dem Fahrzeug (VEH) und dem Vorhandensein der Beschleunigungssignale (ACS) zwei verschiedene Arten von Fahrzeugen (VEH) ermitteln können,

- eine erste Fahrzeugart, wie beispielsweise ein Vorortzug, bei der geringe Beschleunigungskräfte auf alle drei physikalischen Achsen <"x, y, z"> ausgeübt werden, und
- eine zweite Fahrzeugart, wie beispielsweise ein Bus oder ein Taxi, bei der deutlich größere Beschleunigungskräfte auf alle drei physikalischen Achsen <"x, y, z"> ausgeübt werden, so dass
- wenn die mindestens eine der drei unterschiedlichen Metriken die dritte Metrik (M3) ist und die dritte Metrik (M3) gleich oder größer als der Gesamtschwellenwert (THV) ist, die erste Fahrzeugart ermittelt wird, und
- wenn zwei der mindestens drei unterschiedlichen Metriken die erste Metrik (M1) und die zweite Metrik (M2) sind und sowohl die erste Metrik (M1) als auch die zweite Metrik (M2) gleich oder größer als der Gesamtschwellenwert (THV) sind, die zweite Fahrzeugart ermittelt wird.

**13.** Digitalinstrument (DT) nach einem der Ansprüche 9 bis 12, **dadurch gekennzeichnet, dass**
das auf dem Prozessor (PRC) ausführbare Programmmodul (PGM) so konzipiert ist, dass der Schwellenwert (THV) zumindest eines von willkürlich und experimentell oder automatisch ermittelt wird.

**14.** Digitalinstrument (DT) nach einem der Ansprüche 9 bis 13, **gekennzeichnet durch**
das Verwenden einer "BIBO"-basierten elektronischen Buchung.

**15.** Digitalinstrument (DT) nach einem der Ansprüche 9 bis 14, **dadurch gekennzeichnet, dass** das Fahrzeug (VEH) ein öffentliches Transportfahrzeug wie ein Bus, ein Zug, eine Stadtbahn, eine U-Bahn, eine Straßenbahn, ein Taxi oder ein Flugzeug usw. ist.

**16.** Digitalinstrument (DT) nach Anspruch 9, **dadurch gekennzeichnet, dass**
das erste Sensorsignal (SS-1) ein erstes Drucksignal (PRS-1) ist, erzeugt von einem Drucksensor, ein erstes Relativfeuchte- und Temperatursignal (HTS-1) ist, erzeugt von einem Relativfeuchtesensor und einem Temperatursensor, ein erstes Magnetfeldsignal (MFS-1) ist, erzeugt von einem Magnetfeldsensor, oder ein erstes "Inertial-Messeinheit" (Inertial Measurement Unit)-Signal (IMUS-1) ist, erzeugt von einer "Inertial-Messeinheit", und
das zweite Sensorsignal (SS-2) entsprechend ein zweites Drucksignal (PRS-2) ist, erzeugt von einem Drucksensor, ein zweites Relativfeuchte- und Temperatursignal (HTS-2) ist, erzeugt von einem Relativfeuchtesensor und einem Temperatursensor, ein zweites Magnetfeldsignal (MFS-2) ist, erzeugt von einem Magnetfeldsensor, oder ein zweites "Inertial-Messeinheit" (Inertial Measurement Unit)-Signal (IMUS-2) ist, erzeugt von einer "Inertial-Messeinheit".

**17.** Digitalinstrument (DT) nach einem der Ansprüche 9 bis 16, **dadurch gekennzeichnet, dass** es von einem Server oder einer Cloud heruntergeladen werden kann.

**18.** Digitalinstrument (DT) nach einem der Ansprüche 9 bis 17, **dadurch gekennzeichnet, dass** es über ein USB-Speichermedium hochgeladen werden kann.

**19.** Intelligente persönliche Kommunikationsvorrichtung (SPCD) zur Detektion der Anwesenheit eines Passagiers (PAS) in einem Fahrzeug (VEH) mithilfe der Vorrichtung (SPCD), insbesondere eines Smartphones, einschließlich eines Prozessors (PRC) mit einem computerlesbaren Speichermedium (STM), mit dem mindestens ein passagierbezogenes erstes Sensorsignal (SS-1) der intelligenten persönlichen Kommunikationsvorrichtung (SPCD) mit mindestens einem fahrzeugbezogenen Sensorsignal (SS-2) des Fahrzeugs () verglichen wird, insbesondere einem Fahrzeug-Gateway (Vehicular Gateway; VGW) in dem Fahrzeug (VEH), so dass eine einfache "JA"-Aussage (Y-S) oder "NEIN"-Aussage (N-S) in Bezug auf die Anwesenheit des Passagiers (PAS) in dem Fahrzeug (VEH) getroffen wird,
**dadurch gekennzeichnet, dass**
der Prozessor (PRC) für die Anwesenheitsdetektion ein Programmmodul (PGM) zur Datenverarbeitung ausführt, das in dem Speichermedium (STM) gespeichert ist oder davon hochgeladen oder dahin heruntergeladen werden, so dass:

**(a)** in einem Signal-Vorverarbeitungsschritt (Signal Pre-Processing Step; SPPS) das erste und zweite Sensorsignal (SS-1, SS-2) unabhängig voneinander vorverarbeitet werden, indem mindestens eine Neuabtastung (Re-Sampling; RS) und eine Größenberechnung (Magnitude Calculation; MC) durchgeführt werden, um signalspezifische Größenwerte (MV-1, MV-2) zu induzieren, die im Speziellen jeweils zusätzlich vorverarbeitet werden, indem eine Ausschnitterfassung (Clipping Detection; CD) durchgeführt wird, die vorzugsweise zwischen der Neuabtastung (RS) und der Größenberechnung (MC) vorgenommen wird,
**(b)** in einem Fahrzeugidentifizierungsschritt (Vehicle Identification Step; VIS)

**(b1)** die signalspezifischen Größenwerte (MV-1, MV-2) durch Anwendung einer "Kreuzkorrelationsfunktion" (Cross-Correlation Function [CCF]) verglichen werden, so dass die signalspezifischen Größenwerte (MV-1, MV-2) in der Reihenfolge "Überlappung in Zeitdomäne" (Overlapping in Time Domain; OTD), "Fensterbasierte Kreuzkorrelation" (Windowed Cross-Correlation; WCC) und Metrifikation (Metrification; MEF) ausgeführt werden, um infolge der Metrifikation (MEF) mindestens einen metrifikationsbasierten Identifizierungswert (IDV, IDV-1, IDV-2, IDV-3) zu induzieren, und
(b2) der mindestens eine metrifikationsbasierte Identifizierungswert (IDV, IDV-1, IDV-2, IDV-3) jeweils mit einem Gesamtschwellenwert (THV) verglichen wird, so dass (IDF), wenn einer des mindestens einen metrifikationsbasierten Identifizierungswerts (IDV, IDV-1, IDV-2, IDV-3) kleiner als oder kleiner und gleich dem Schwellenwert (THV) ist, die "NEIN"-Aussage (N-S) bezüglich der Anwesenheit des Passagiers (PAS) in dem Fahrzeug (VEH) erfolgt, andernfalls die "JA"-Aussage (Y-S) bezüglich der Anwesenheit des Passagiers (PAS) in dem Fahrzeug (VEH) erfolgt, wobei insbesondere eine entsprechende Ausgabemenge (OQ) bereitgestellt wird, die vorzugsweise ein boolescher Wert (BV) ist.

**20.** Vorrichtung (SPCD) nach Anspruch 19, **gekennzeichnet durch**

- einen Sensor (SE) zur Erzeugung des mit dem Prozessor (PRC) verbundenen ersten Sensorsignals (SS-1), ausgelegt als ein Beschleunigungsmesser oder ein Beschleunigungsmesser und ein Gyroskop, die erste Beschleunigungssignale (ACS-1) aufgrund des Messens von Beschleunigungskräften erzeugen, die in allen drei physikalischen Achsen <"x, y, z"> auf die Vorrichtung (SPCD) ausgeübt werden, und
- eine Sende-Empfangseinheit (TRU), die mit dem Prozessor (PRC) verbunden ist und als das zweite Sensorsignal (SS-2) zweite Beschleunigungssignale (ACS-2) empfängt, erzeugt aufgrund des Messens von Beschleunigungskräften, die in allen drei physikalischen Achsen <"x, y, z"> auf das Fahrzeug (VEH) ausgeübt werden.

**21.** Vorrichtung (SPCD) nach Anspruch 19 oder 20, im Speziellen nach Anspruch 20, **dadurch gekennzeichnet, dass**
der Prozessor (PRC) das Programmmodul (PGM) für die Anwesenheitsdetektion ausführt, so dass die Metrifikation (MEF) durch mindestens eine der drei unterschiedlichen Metriken (MI, M2, M3) dargestellt wird,

- eine erste Metrik (M1), die ein "Spitze-Effektivwert"-Verhältnis (PRMSR) einer "Fensterbasierten Kreuzkorrelation [WCC]"-Funktion definiert, wobei der "Effektivwert [RMS]" der WCC-Funktion als "Kreuzkorrelationsenergie [CCE]" bezeichnet wird,
- eine zweite Metrik (M2), die einen "Spitze-Nacheilwert mit dem höchsten Prozentsatz aller Spitze-Nacheilwerte über alle "Kreuzkorrelationsfenster"" (Peak Lag Value with the highest percentage of all Peak Lag Values over all "Cross- Correlation Windows") definiert, bezeichnet als "Korrelation-Nacheil-Verhältnis" (Correlation Lag Ratio; CLR), und
- eine dritte Metrik (M3), die ein "Verhältnis eines größten Teils einer "Kreuzkorrelationsenergie [CCE]" zu einem Rest der "Kreuzkorrelationsenergie [CCE]" über alle "Kreuzkorrelationsfenster"" definiert, bezeichnet als "RMS-zu-RMS-Verhältnis" (RMS-to-RMS Ratio; RRR).

**22.** Vorrichtung (SPCD) nach Anspruch 21, zurückverweisend auf Anspruch 20, **dadurch gekennzeichnet, dass**
der Prozessor (PRC) das Programmmodul (PGM) für die Anwesenheitsdetektion so ausführt, dass die erste Metrik (M1), die zweite Metrik (M2) und die dritte Metrik (M3) im Fall der "JA"-Aussage (Y-S) bezüglich der Anwesenheit des Passagiers (PAS) in dem Fahrzeug (VEH) und dem Vorhandensein der Beschleunigungssignale (ACS) zwei verschiedene Arten von Fahrzeugen (VEH) ermitteln können,

- eine erste Fahrzeugart, wie beispielsweise ein Vorortzug, bei der geringe Beschleunigungskräfte auf alle drei physikalischen Achsen <"x, y, z"> ausgeübt werden, und
- eine zweite Fahrzeugart, wie beispielsweise ein Bus oder ein Taxi, bei der deutlich größere Beschleunigungskräfte auf alle drei physikalischen Achsen <"x, y, z"> ausgeübt werden,
so dass,
- wenn die mindestens eine der drei unterschiedlichen Metriken die dritte Metrik (M3) ist und die dritte Metrik (M3) gleich oder größer als der Gesamtschwellenwert (THV) ist, die erste Fahrzeugart ermittelt wird, und
- wenn zwei der mindestens drei unterschiedlichen Metriken die erste Metrik (M1) und die zweite Metrik (M2) sind und sowohl die erste Metrik (M1) als auch die zweite Metrik (M2) gleich oder größer als der Gesamtschwellenwert (THV) sind, die zweite Fahrzeugart ermittelt wird.

**23.** Vorrichtung (SPCD) nach einem der Ansprüche 19 bis 22, **dadurch gekennzeichnet, dass**
der Prozessor (PRC) das Programmmodul (PGM) für die Anwesenheitsdetektion so ausführt, dass der Schwellenwert (THV) zumindest eines von willkürlich und experimentell oder automatisch ermittelt wird.

**24.** Vorrichtung (SPCD) nach einem der Ansprüche 19 bis 23, **gekennzeichnet durch**
das Verwenden einer "BIBO"-basierten elektronischen Buchung.

**25.** Vorrichtung (SPCD) nach einem der Ansprüche 19 bis 24, **dadurch gekennzeichnet, dass**
das Fahrzeug (VEH) ein öffentliches Transportfahrzeug wie ein Bus, ein Zug, eine Stadtbahn, eine U-Bahn, eine Straßenbahn, ein Taxi oder ein Flugzeug usw. ist.

**26.** Vorrichtung (SPCD) nach Anspruch 18, **gekennzeichnet durch**

- einen Sensor (SE) zum Erzeugen des mit dem Prozessor (PRC) verbundenen ersten Sensorsignals (SS-1), ausgelegt als ein Drucksensor der ein erstes Drucksignal (PRS-1) erzeugt, ein Relativfeuchtesensor und ein Temperatursensor, der ein erstes Relativfeuchte- und Temperatursignal (HTS-1) erzeugt, ein Magnetfeldsensor, der ein erstes Magnetfeldsignal (MFS-1) erzeugt, oder ein "Inertial-Messeinheit"-Sensor, der ein "Inertial-Messeinheit"-Signal (IMUS-1) erzeugt, und
- eine Sende-Empfangseinheit (TRU), die mit dem Prozessor (PRC) verbunden ist und als zweites Sensorsignal (SS-2) dementsprechend jeweils ein zweites Drucksignal (PRS-2) empfängt, das von einem weiteren Drucksensor erzeugt wird, ein zweites Relativfeuchte- und Temperatursignal (HTS-2) empfängt, das von einem weiteren Relativfeuchtesensor und einem weiteren Temperatursensor erzeugt wird, ein zweites Magnetfeldsignal (MFS-2), das von einem weiteren Drucksensor erzeugt wird, oder ein zweites "Inertial-Messeinheit"-Signal (IMUS-2), das von einer weiteren "Inertial-Messeinheit" erzeugt wird.

**27.** Fahrzeug-Gateway (VGW) zur Detektion der Anwesenheit eines Passagiers (PAS) in einem Fahrzeug (VEH) mithilfe einer intelligenten persönlichen Kommunikationsvorrichtung (SPCD), insbesondere Speziellen eines Smartphones, einschließlich eines Prozessors (PRC) mit einem computerlesbaren Speichermedium (STM), mit dem mindestens ein passagierbezogenes erstes Sensorsignal (SS-1) der intelligenten persönlichen Kommunikationsvorrichtung (SPCD) mit mindestens einem fahrzeugbezogenen Sensorsignal (SS-2) des Fahrzeugs () verglichen wird, insbesondere einem Fahrzeug-Gateway (VGW) in dem Fahrzeug (VEH), so dass eine einfache "JA"-Aussage (Y-S) oder "NEIN"-Aussage (N-S) in Bezug auf die Anwesenheit des Passagiers (PAS) in dem Fahrzeug (VEH) getroffen wird,
**dadurch gekennzeichnet, dass**
der Prozessor (PRC) für die Anwesenheitsdetektion ein Programmmodul (PGM) zur Datenverarbeitung ausführt, das in dem Speichermedium (STM) gespeichert ist oder davon hochgeladen oder dahin heruntergeladen werden, so dass:

**(a)** in einem Signal-Vorverarbeitungsschritt (Signal Pre-Processing Step; SPPS) das erste und zweite Sensorsignal (SS-1, SS-2) unabhängig voneinander vorverarbeitet werden, indem mindestens eine Neuabtastung (Re-Sampling; RS) und eine Größenberechnung (Magnitude Calculation; MC) durchgeführt werden, um signalspezifische Größenwerte (MV-1, MV-2) zu induzieren, die im Speziellen jeweils zusätzlich vorverarbeitet werden, indem eine Ausschnitterfassung (Clipping Detection; CD) durchgeführt wird, die vorzugsweise zwischen der Neuabtastung (RS) und der Größenberechnung (MC) vorgenommen wird,
**(b)** in einem Fahrzeugidentifizierungsschritt (Vehicle Identification Step; VIS)

**(b1)** die signalspezifischen Größenwerte (MV-1, MV-2) durch Anwendung einer "Kreuzkorrelationsfunktion [CCF]" verglichen werden, so dass die signalspezifischen Größenwerte (MV-1, MV-2) in der Reihenfolge "Überlappung in Zeitdomäne" (OTD), "Fensterbasierte Kreuzkorrelation" (WCC) und Metrifikation (MEF) ausgeführt werden, um infolge der Metrifikation (MEF) mindestens einen metrifikationsbasierten Identifizierungswert (IDV, IDV-1, IDV-2, IDV-3) zu induzieren, und
**(b2)** der mindestens eine metrifikationsbasierte Identifizierungswert (IDV, IDV-1, IDV-2, IDV-3) jeweils mit einem Gesamtschwellenwert (THV) verglichen wird, so dass (IDF), wenn einer des mindestens einen metrifikationsbasierten Identifizierungswerts (IDV, IDV-1, IDV-2, IDV-3) kleiner als oder kleiner und gleich dem Schwellenwert (THV) ist, die "NEIN"-Aussage (N-S) bezüglich der Anwesenheit des Passagiers (PAS) in dem Fahrzeug (VEH) erfolgt, andernfalls die "JA"-Aussage (Y-S) bezüglich der Anwesenheit des Passagiers (PAS) in dem Fahrzeug (VEH) erfolgt, wobei insbesondere eine entsprechende Ausgabemenge (OQ) bereitgestellt wird, die vorzugsweise ein boolescher Wert (BV) ist.

**28.** Fahrzeug-Gateway (VGW) nach Anspruch 27, **gekennzeichnet durch**

- einen Sensor (SE) zur Erzeugung des mit dem Prozessor (PRC) verbundenen zweiten Sensorsignals (SS-2), ausgelegt als ein Beschleunigungsmesser oder ein Beschleunigungsmesser und ein Gyroskop, die zweite Beschleunigungssignale (ACS-2) aufgrund des Messens von Beschleunigungskräften erzeugen, die in allen drei physikalischen Achsen <"x, y, z"> auf das Fahrzeug (VEH) ausgeübt werden, und
- eine Sende-Empfangseinheit (TRU), die mit dem Prozessor (PRC) verbunden ist und als das erste Sensorsignal (SS-1) erste Beschleunigungssignale (ACS-1) empfängt, erzeugt aufgrund des Messens von Beschleunigungskräften, die in allen drei physikalischen Achsen <"x, y, z"> auf die Vorrichtung (SPCD) ausgeübt werden.

**29.** Fahrzeug-Gateway (VGW) nach Anspruch 27 oder 28, im Speziellen nach Anspruch 28, **dadurch gekennzeichnet, dass** der Prozessor (PRC) das Programmmodul (PGM) für die Anwesenheitsdetektion ausführt, so dass die Metrifikation (MEF) durch mindestens eine der drei unterschiedlichen Metriken (Ml, M2, M3) dargestellt wird,

- eine erste Metrik (M1), die ein "Spitze-Effektivwert"-Verhältnis (PRMSR) einer "Fensterbasierten Kreuzkorrelation [WCC]"-Funktion definiert, wobei der "Effektivwert [RMS]" der WCC-Funktion als "Kreuzkorrelationsenergie [CCE]" bezeichnet wird,
- eine zweite Metrik (M2), die einen "Spitze-Nacheilwert mit dem höchsten Prozentsatz aller Spitze-Nacheilwerte über alle "Kreuzkorrelationsfenster"" (Peak Lag Value with the highest percentage of all Peak Lag Values over all "Cross-Correlation Windows") definiert, bezeichnet als "Korrelation-Nacheil-Verhältnis" (Correlation Lag Ratio; CLR), und
- eine dritte Metrik (M3), die ein "Verhältnis eines größten Teils einer Kreuzkorrelationsenergie [CCE]" zu einem Rest der "Kreuzkorrelationsenergie [CCE]" über alle "Kreuzkorrelationsfenster"" definiert, bezeichnet als "RMS-zu-RMS-Verhältnis" (RMS-to-RMS Ratio; RRR).

**30.** Fahrzeug-Gateway (VGW) nach Anspruch 29, zurückverweisend auf Anspruch 28, **dadurch gekennzeichnet, dass**
der Prozessor (PRC) das Programmmodul (PGM) für die Anwesenheitsdetektion so ausführt, dass die erste Metrik (M1), die zweite Metrik (M2) und die dritte Metrik (M3) im Fall der "JA"-Aussage (Y-S) bezüglich der Anwesenheit des Passagiers (PAS) in dem Fahrzeug (VEH) und dem Vorhandensein der Beschleunigungssignale (ACS) zwei verschiedene Arten von Fahrzeugen (VEH) ermitteln können,

- eine erste Fahrzeugart, wie beispielsweise ein Vorortzug, bei der geringe Beschleunigungskräfte auf alle drei physikalischen Achsen <"x, y, z"> ausgeübt werden, und
- eine zweite Fahrzeugart, wie beispielsweise ein Bus oder ein Taxi, bei der deutlich größere Beschleunigungskräfte auf alle drei physikalischen Achsen <"x, y, z"> ausgeübt werden,
so dass,
- wenn die mindestens eine der drei unterschiedlichen Metriken die dritte Metrik (M3) ist und die dritte Metrik (M3) gleich oder größer als der Gesamtschwellenwert (THV) ist, die erste Fahrzeugart ermittelt wird, und
- wenn zwei der mindestens drei unterschiedlichen Metriken die erste Metrik (M1) und die zweite Metrik (M2) sind und sowohl die erste Metrik (M1) als auch die zweite Metrik (M2) gleich oder größer als der Gesamtschwellenwert (THV) sind, die zweite Fahrzeugart ermittelt wird.

**31.** Fahrzeug-Gateway (VGW) nach einem der Ansprüche 27 bis 30, **dadurch gekennzeichnet, dass**
der Prozessor (PRC) das Programmmodul (PGM) für die Anwesenheitsdetektion so ausführt, dass der Schwellenwert (THV) zumindest eines von willkürlich und experimentell oder automatisch ermittelt wird.

**32.** Fahrzeug-Gateway (VGW) nach einem der Ansprüche 27 bis 31, **gekennzeichnet durch**
das Verwenden einer "BIBO"-basierten elektronischen Buchung.

**33.** Fahrzeug-Gateway (VGW) nach einem der Ansprüche 27 bis 32, **dadurch gekennzeichnet, dass**
das Fahrzeug (VEH) ein öffentliches Transportfahrzeug wie ein Bus, ein Zug, eine Stadtbahn, eine U-Bahn, eine Straßenbahn, ein Taxi oder ein Flugzeug usw. ist.

**34.** Fahrzeug-Gateway (VGW) nach Anspruch 27, **gekennzeichnet durch**

- einen Sensor (SE) zum Erzeugen des mit dem Prozessor (PRC) verbundenen zweiten Sensorsignals (SS-2), ausgelegt als ein Drucksensor der ein zweites Drucksignal (PRS-2) erzeugt, ein Relativfeuchtesensor und ein Temperatursensor, der ein zweites Relativfeuchte- und Temperatursignal (HTS-2) erzeugt, ein Magnetfeldsensor, der ein zweites Magnetfeldsignal (MFS-2) erzeugt, oder ein "Inertial-Messeinheit"-Sensor, der ein zweites "Inertial-Messeinheit"-Signal (IMUS-2) erzeugt, und
- eine Sende-Empfangseinheit (TRU), die mit dem Prozessor (PRC) verbunden ist und als erstes Sensorsignal (SS-1) dementsprechend jeweils ein erstes Drucksignal (PRS-1) empfängt, das von einem weiteren Drucksensor erzeugt wird, ein erstes Relativfeuchte- und Temperatursignal (HTS-1) empfängt, das von einem weiteren Relativfeuchtesensor und einem weiteren Temperatursensor erzeugt wird, ein erstes Magnetfeldsignal (MFS-1), das von einem weiteren Drucksensor erzeugt wird, oder ein erstes "Inertial-Messeinheit"-Signal (IMUS-1), das von einer weiteren "Inertial-Messeinheit" erzeugt wird.

**35.** BIBO-System zur Detektion der Anwesenheit eines Passagiers (PAS) in einem Fahrzeug (VEH) mithilfe einer intelligenten persönlichen Kommunikationsvorrichtung (Smart Personal Communication Device; SPCD), insbesondere eines Smartphones, mit der mindestens ein passagierbezogenes erstes Sensorsignal (SS-1) der intelligenten persönlichen Kommunikationsvorrichtung (SPCD) mit mindestens einem fahrzeugbezogenen Sensorsignal (SS-2) des Fahrzeugs (VEH) verglichen wird, insbesondere einem Fahrzeug-Gateway (Vehicular Gateway; VGW) in dem Fahrzeug (VEH), so dass eine einfache "JA"-Aussage (Y-S) oder "NEIN"-Aussage (N-S) in Bezug auf die Anwesenheit des Passagiers (PAS) in dem Fahrzeug (VEH) getroffen wird,
**gekennzeichnet durch**

eine Kommunikationsverbindung (COL) zwischen einem Fahrzeug-Gateway (VGW) und der intelligenten persönlichen Kommunikationsvorrichtung (SPCD), wobei für die Anwesenheitsdetektion mindestens eines von dem Fahrzeug-Gateway (VGW) und der intelligente persönliche Kommunikationsvorrichtung (SPCD) entsprechend einem der Ansprüche 27 bis 34 bzw. der Ansprüche 19 bis 26 ausgelegt ist und im Speziellen ein Digitalinstrument nach einem der Ansprüche 9 bis 18 zur Durchführung des Verfahrens nach einem der Ansprüche 1 bis 8 umfasst.

## Revendications

**1.** Un procédé de détection de présence à l'intérieur d'un véhicule (VEH) d'un passager (PAS) au moyen d'un dispositif de communication personnel intelligent (SPCD), plus particulièrement un téléphone multifonction, grâce auquel au moins un premier signal de capteur associé à un passager (SS-1) du dispositif de communication personnel intelligent (SPCD) est comparé à au moins un deuxième signal de capteur associé à un véhicule (SS-2) du véhicule (VEH), plus particulièrement d'une passerelle véhiculaire (VGW) dans le véhicule (VEH), de sorte qu'une simple mention "OUI" (Y-S) ou mention "NON" (N-S) concernant la présence du passager (PAS) dans le véhicule (VEH) soit effectuée,
**caractérisé en ce que**

(a) dans une étape de prétraitement de signal (SPPS), les premier et deuxième signaux de capteur (SS-1, SS-2) sont chacun prétraités indépendamment par l'exécution d'au moins un rééchantillonnage (RS) et un calcul de grandeur (MC) de façon à induire des valeurs de grandeur spécifiques à un signal (MV-1, MV-2), qui plus particulièrement sont chacune prétraitées additionnellement par l'exécution d'une détection d'écrêtage (CD) qui est exécutée de préférence entre le rééchantillonnage (RS) et le calcul de grandeur (MC),
(b) dans une étape d'identification de véhicule (VIS)

(b1) les valeurs de grandeur spécifiques à un signal (MV-1, MV-2) sont comparées par l'application d'une "fonction de corrélation croisée [CCF]" de sorte que les valeurs de grandeur spécifiques à un signal (MV-1, MV-2) soient exécutées dans l'ordre suivant : "chevauchement dans le domaine temporel" (OTD), "corrélation croisée à fenêtres" (WCC) et métrisation (MEF) de façon à induire du fait de la métrisation (MEF) au moins une valeur d'identification basée sur la métrisation (IDV, IDV-1, IDV-2, IDV-3) et
(b2) les au moins une valeur d'identification basée sur la métrisation (IDV, IDV-1, IDV-2, IDV-3) sont comparée chacune à une valeur seuil globale (THV) de sorte que (IDF), si une des au moins une valeur d'identification basée sur la métrisation (IDV, IDV-1, IDV-2, IDV-3) se situe sous ou sous et égale à la valeur seuil (THV), la mention "NON" (N-S) concernant la présence du passager (PAS) dans le véhicule (VEH) est effectuée, dans le cas contraire, la mention "OUI" (Y-S) concernant la présence du passager (PAS) dans le véhicule (VEH) est effectuée, grâce à quoi plus particulièrement de manière correspondante une quantité produite en sortie (OQ) est fournie, qui est de préférence une valeur booléenne (BV).

**2.** Le procédé selon la revendication 1, **caractérisé en ce que** le premier signal de capteur (SS-1) contient des premiers signaux d'accélération (ACS-1) générés par un accéléromètre ou un accéléromètre et un gyroscope du fait de la mesure de forces d'accélération sur la totalité des trois axes physiques <"x, y, z"> qui sont exercées sur le dispositif de communication personnel intelligent (SPCD) et
le deuxième signal de capteur (SS-2) contient des deuxièmes signaux d'accélération (ACS-2) générés par un accéléromètre ou un accéléromètre et un gyroscope du fait de la mesure de forces d'accélération sur la totalité des trois axes physiques <"x, y, z"> qui sont exercées sur le véhicule (VEH).

**3.** Le procédé selon la revendication 1 ou 2, plus particulièrement selon la revendication 2, **caractérisé en ce que**
la métrisation (MEF) est constituée par au moins une mesure parmi trois mesures différentes (M1, M2, M3),

- une première mesure (M1) définissant un rapport d'une "moyenne quadratique [RMS] sur crête" (PRMSR) d'une fonction de "corrélation croisée à fenêtres [WCC]", grâce à quoi la "moyenne quadratique [RMS]" de la fonction WCC est appelée "énergie de corrélation croisée [CCE]",
- une deuxième mesure (M2) définissant une "valeur de décalage de crête avec le pourcentage le plus élevé de la totalité des valeurs de décalage de crête sur la totalité des "fenêtres de corrélation croisée" appelé "rapport de décalage de corrélation"(CLR), et
- une troisième mesure (M3) définissant un "rapport d'une partie la plus grande "d'énergie de corrélation croisée [CCE]" sur une partie restante de "l'énergie de corrélation croisée [CCE]" sur la totalité des "fenêtres de corrélation croisée" appelé "rapport RMS sur RMS" (RRR).

**4.** Le procédé selon la revendication 3 renvoyant à la revendication 2,
**caractérisé en ce que**
la première mesure (M1), la deuxième mesure (M2) et la troisième mesure (M3) sont adaptées de façon à déterminer, dans le cas de la mention "OUI" (Y-S) concernant la présence du passager (PAS) dans le véhicule (VEH) et de l'existence des signaux d'accélération (ACS), deux types différents de véhicule (VEH),

- un premier type de véhicule, tel que train de banlieue, sur lequel des forces d'accélération faibles sur la totalité des trois axes physiques <"x, y, z"> sont exercées, et
- un deuxième type de véhicule, tel que bus ou taxi, sur lequel des forces d'accélération significativement plus élevées sur la totalité des trois axes physiques <"x, y, z"> sont exercées,

de sorte que,

- si la au moins une des trois mesures différentes est la troisième mesure (M3) et la troisième mesure (M3) est égale ou supérieure à la valeur seuil globale (THV), le premier type de véhicule soit déterminé et
- si deux des au moins trois mesures différentes sont la première mesure (M1) et la deuxième mesure (M2) et que la première mesure (M1) et la deuxième mesure (M2) sont toutes deux égales ou supérieures à la valeur seuil globale (THV), le deuxième type de véhicule étant déterminé.

**5.** Le procédé selon l'une quelconque des revendications 1 à 4, **caractérisé en ce que**
la valeur seuil (THV) est au moins une valeur parmi une valeur arbitraire et une valeur déterminée expérimentalement ou automatiquement.

**6.** Le procédé selon l'une quelconque des revendications 1 à 5, **caractérisé par**
l'utilisation d'une billetterie électronique de type "BIBO".

**7.** Le procédé selon l'une quelconque des revendications 1 à 6, **caractérisé en ce que**
le véhicule (VEH) est un véhicule de transport public tel que bus, train, train urbain, métro, tramway, taxi ou avion, etc.

**8.** Le procédé selon la revendication 1, **caractérisé en ce que**
le premier signal de capteur (SS-1) est un premier signal de pression (PRS-1) généré par un capteur de pression, un premier signal de température et d'humidité relative (HTS-1) généré par un capteur d'humidité relative et un capteur de température, un premier signal de champ magnétique (MFS-1) généré par un capteur de champ magnétique ou un premier signal "d'unité de mesure inertielle" (IMUS-1) généré par une "unité de mesure inertielle" et
le deuxième signal de capteur (SS-2) est de manière correspondante un deuxième signal de pression (PRS-2) généré par un capteur de pression, un deuxième signal de température et d'humidité relative (HTS-2) généré par un capteur d'humidité relative et un capteur de température, un deuxième signal de champ magnétique (MFS-2) généré par un capteur de champ magnétique ou un deuxième signal "d'unité de mesure inertielle" (IMUS-2) généré par une "unité de mesure inertielle"

**9.** Un outil numérique (DT) de détection de présence à l'intérieur d'un véhicule (VEH) d'un passager (PAS) au moyen d'un dispositif de communication personnel intelligent (SPCD), plus particulièrement un téléphone multifonction, grâce auquel au moins un premier signal de capteur associé à un passager (SS-1) du dispositif de communication personnel intelligent (SPCD) est comparé à au moins un deuxième signal de capteur associé à un véhicule (SS-2) du véhicule (VEH), plus particulièrement d'une passerelle véhiculaire (VGW) dans le véhicule (VEH), de sorte qu'une simple mention "OUI" (Y-S) ou mention "NON" (N-S) concernant la présence du passager (PAS) dans le véhicule (VEH) soit effectuée,
**caractérisé par**
un module de programme (PGM) destiné à un traitement de données, qui est exécutable sur un processeur (PRC), plus particulièrement un processeur (PRC) du dispositif de communication personnel intelligent (SPCD) ou de la passerelle véhiculaire (VGW) dans le véhicule (VEH), et conçu de sorte que :

(a) dans une étape de prétraitement de signal (SPPS), les premier et deuxième signaux de capteur (SS-1, SS-2) sont chacun prétraités indépendamment par l'exécution d'au moins un rééchantillonnage (RS) et un calcul de grandeur (MC) de façon à induire des valeurs de grandeur spécifiques à un signal (MV-1, MV-2), qui plus particulièrement sont chacune prétraitées additionnellement par l'exécution d'une détection d'écrêtage (CD) qui est exécutée de préférence entre le rééchantillonnage (RS) et le calcul de grandeur (MC),
(b) dans une étape d'identification de véhicule (VIS)

(b1) les valeurs de grandeur spécifiques à un signal (MV-1, MV-2) sont comparées par l'application d'une "fonction de corrélation croisée [CCF]" de sorte que les valeurs de grandeur spécifiques à un signal (MV-1, MV-2) soient exécutées dans l'ordre suivant : "chevauchement dans le domaine temporel" (OTD), "corrélation croisée à fenêtres" (WCC) et métrisation (MEF) de façon à induire du fait de la métrisation (MEF) au moins une valeur d'identification basée sur la métrisation (IDV, IDV-1, IDV-2, IDV-3) et

(b2) les au moins une valeur d'identification basée sur la métrisation (IDV, IDV-1, IDV-2, IDV-3) sont comparées chacune à une valeur seuil globale (THV) de sorte que (IDF), si une des au moins une valeur d'identification basée sur la métrisation (IDV, IDV-1, IDV-2, IDV-3) se situe sous ou sous et égale à la valeur seuil (THV), la mention "NON" (N-S) concernant la présence du passager (PAS) dans le véhicule (VEH) soit effectuée, dans le cas contraire, la mention "OUI" (Y-S) concernant la présence du passager (PAS) dans le véhicule (VEH) soit effectuée, grâce à quoi plus particulièrement une quantité produite en sortie (OQ) est fournie de manière correspondante, qui est de préférence une valeur booléenne (BV).

**10.** L'outil numérique (DT) selon la revendication 9, **caractérisé en ce que**
le premier signal de capteur (SS-1) contient des premiers signaux d'accélération (ACS-1) générés par un accéléromètre ou un accéléromètre et un gyroscope du fait de la mesure de forces d'accélération sur la totalité des trois axes physiques <"x, y, z"> qui sont exercées sur le dispositif de communication personnel intelligent (SPCD) et
le deuxième signal de capteur (SS-2) contient des deuxièmes signaux d'accélération (ACS-2) générés par un accéléromètre ou un accéléromètre et un gyroscope du fait de la mesure de forces d'accélération sur la totalité des trois axes physiques <"x, y, z"> qui sont exercées sur le véhicule (VEH).

**11.** L'outil numérique (DT) selon la revendication 9 ou 10, plus particulièrement selon la revendication 10, **caractérisé en ce que**
le module de programme (PGM) qui est exécutable sur le processeur (PRC) est conçu de sorte que la métrisation (MEF) soit constituée par au moins une mesure parmi trois mesures différentes (M1, M2, M3)

- une première mesure (M1) définissant un rapport d'une "moyenne quadratique [RMS] sur crête" (PRMSR) d'une fonction de "corrélation croisée à fenêtres [WCC]", grâce à quoi la "moyenne quadratique [RMS]" de la fonction WCC est appelée "énergie de corrélation croisée [CCE]",
- une deuxième mesure (M2) définissant une "valeur de décalage de crête avec le pourcentage le plus élevé de la totalité des valeurs de décalage de crête sur la totalité des "fenêtres de corrélation croisée" appelée "rapport de décalage de corrélation"(CLR), et
- une troisième mesure (M3) définissant un "rapport d'une partie la plus grande "d'énergie de corrélation croisée [CCE]" sur une partie restante de "l'énergie de corrélation croisée [CCE]" sur la totalité des "fenêtres de corrélation croisée" appelé "rapport RMS sur RMS" (RRR).

**12.** L'outil numérique (DT) selon la revendication 11 renvoyant à la revendication 10, **caractérisé en ce que** le module de programme (PGM) qui est exécutable sur le processeur (PRC) est conçu de sorte que la première mesure (M1), la deuxième mesure (M2) et la troisième mesure (M3) soient adaptées de façon à déterminer, dans le cas de la mention "OUI" (Y-S) concernant la présence du passager (PAS) dans le véhicule (VEH) et de l'existence des signaux d'accélération (ACS), deux types différents de véhicule (VEH),

- un premier type de véhicule, tel que train de banlieue, sur lequel des forces d'accélération faibles sur la totalité des trois axes physiques <"x, y, z"> sont exercées, et
- un deuxième type de véhicule, tel que bus ou taxi, sur lequel des forces d'accélération significativement plus élevées sur la totalité des trois axes physiques <"x, y, z"> sont exercées, de sorte que,
- si la au moins une des trois mesures différentes est la troisième mesure (M3) et la troisième mesure (M3) est égale ou supérieure à la valeur seuil globale (THV), le premier type de véhicule soit déterminé, et
- si deux des au moins trois mesures différentes sont la première mesure (M1) et la deuxième mesure (M2) et que la première mesure (M1) et la deuxième mesure (M2) sont toutes deux égales ou supérieures à la valeur seuil globale (THV), le deuxième type de véhicule soit déterminé.

**13.** L'outil numérique (DT) selon l'une quelconque des revendications 9 à 12, **caractérisé en ce que**
le module de programme (PGM) qui est exécutable sur le processeur (PRC) est conçu de sorte que la valeur seuil (THV) soit au moins une valeur parmi une valeur arbitraire et une valeur déterminée expérimentalement ou automatiquement.

**14.** L'outil numérique (DT) selon l'une quelconque des revendications 9 à 13, **caractérisé par** l'utilisation d'une billetterie électronique de type "BIBO".

**15.** L'outil numérique (DT) selon l'une quelconque des revendications 9 à 14, **caractérisé en ce que** le véhicule (VEH) est un véhicule de transport public tel que bus, train, train urbain, métro, tramway, taxi ou avion, etc.

**16.** L'outil numérique (DT) selon la revendication 9, **caractérisé en ce que** le premier signal de capteur (SS-1) est un premier signal de pression (PRS-1) généré par un capteur de pression, un premier signal de température et d'humidité relative (HTS-1) généré par un capteur d'humidité relative et un capteur de température, un premier signal de champ magnétique (MFS-1) généré par un capteur de champ magnétique ou un premier signal "d'unité de mesure inertielle" (IMUS-1) généré par une "unité de mesure inertielle" et le deuxième signal de capteur (SS-2) est de manière correspondante un deuxième signal de pression (PRS-2) généré par un capteur de pression, un deuxième signal de température et d'humidité relative (HTS-2) généré par un capteur d'humidité relative et un capteur de température, un deuxième signal de champ magnétique (MFS-2) généré par un capteur de champ magnétique ou un deuxième signal "d'unité de mesure inertielle" (IMUS-2) généré par une "unité de mesure inertielle"

**17.** L'outil numérique (DT) selon l'une quelconque des revendications 9 à 16, **caractérisé en ce qu'**il est téléchargeable vers l'aval à partir d'un serveur ou d'un nuage.

**18.** L'outil numérique (DT) selon l'une quelconque des revendications 9 à 17, **caractérisé en ce qu'**il est téléchargeable vers l'amont par l'intermédiaire d'une clé USB.

**19.** Un dispositif de communication personnel intelligent (SPCD) de détection de présence à l'intérieur d'un véhicule (VEH) d'un passager (PAS) au moyen du dispositif (SPCD), plus particulièrement un téléphone multifonction, comprenant un processeur (PRC) avec un support à mémoire lisible par ordinateur (STM) grâce auquel au moins un premier signal de capteur associé à un passager (SS-1) du dispositif (SPCD) est comparé à au moins un deuxième signal de capteur associé à un véhicule (SS-2) du véhicule (), plus particulièrement d'une passerelle véhiculaire (VGW) dans le véhicule (VEH), de sorte qu'une simple mention "OUI" (Y-S) ou mention "NON" (N-S) concernant la présence du passager (PAS) dans le véhicule (VEH) soit effectuée,
**caractérisé en ce que**
le processeur (PRC) exécute pour la détection de présence un module de programme (PGM) destiné à un traitement de données, qui est conservé en mémoire ou téléchargeable vers l'amont ou téléchargeable vers l'aval dans le support à mémoire (STM), de sorte que :

(a) dans une étape de prétraitement de signal (SPPS), les premier et deuxième signaux de capteur (SS-1, SS-2) sont chacun prétraités indépendamment par l'exécution d'au moins un rééchantillonnage (RS) et un calcul de grandeur (MC) de façon à induire des valeurs de grandeur spécifiques à un signal (MV-1, MV-2), qui plus particulièrement sont chacune prétraitées additionnellement par l'exécution d'une détection d'écrêtage (CD) qui est exécutée de préférence entre le rééchantillonnage (RS) et le calcul de grandeur (MC),
(b) dans une étape d'identification de véhicule (VIS)

(b1) les valeurs de grandeur spécifiques à un signal (MV-1, MV-2) sont comparées par l'application d'une "fonction de corrélation croisée [CCF]" de sorte que les valeurs de grandeur spécifiques à un signal (MV-1, MV-2) soient exécutées dans l'ordre suivant : "chevauchement dans le domaine temporel" (OTD), "corrélation croisée à fenêtres" (WCC) et métrisation (MEF) de façon à induire du fait de la métrisation (MEF) au moins une valeur d'identification basée sur la métrisation (IDV, IDV-1, IDV-2, IDV-3) et
(b2) les au moins une valeur d'identification basée sur la métrisation (IDV, IDV-1, IDV-2, IDV-3) sont comparées chacune à une valeur seuil globale (THV) de sorte que (IDF), si une des au moins une valeur d'identification basée sur la métrisation (IDV, IDV-1, IDV-2, IDV-3) se situe sous ou sous et égale à la valeur seuil (THV), la mention "NON" (N-S) concernant la présence du passager (PAS) dans le véhicule (VEH) soit effectuée, dans le cas contraire, la mention "OUI" (Y-S) concernant la présence du passager (PAS) dans le véhicule (VEH) soit effectuée, grâce à quoi plus particulièrement une quantité produite en sortie (OQ) est fournie de manière correspondante, qui est de préférence une valeur booléenne (BV).

**20.** Le dispositif (SPCD) selon la revendication 19, **caractérisé par**

- un capteur (SE) destiné à la génération du premier signal de capteur (SS-1), qui est raccordé au processeur (PRC), conçu sous la forme d'un accéléromètre ou d'un accéléromètre et d'un gyroscope générant des premiers signaux d'accélération (ACS-1) du fait de la mesure de forces d'accélération sur la totalité des trois axes physiques <"x, y, z"> qui sont exercées sur le dispositif (SPCD) et
- une unité émetteur-récepteur (TRU), qui est raccordée au processeur (PRC), recevant sous la forme du deuxième signal de capteur (SS-2) des deuxièmes signaux d'accélération (ACS-2) générés du fait de la mesure de forces d'accélération sur la totalité des trois axes physiques <"x, y, z"> qui sont exercées sur le véhicule (VEH).

**21.** Le dispositif (SPCD) selon la revendication 19 ou 20, plus particulièrement selon la revendication 20, **caractérisé en ce que**
le processeur (PRC) exécute le module de programme (PGM) destiné à la détection de présence de sorte que la métrisation (MEF) soit constituée par au moins une mesure parmi trois mesures différentes (M1, M2, M3),

- une première mesure (M1) définissant un rapport d'une "moyenne quadratique [RMS] sur crête" (PRMSR) d'une fonction de "corrélation croisée à fenêtres [WCC]", grâce à quoi la "moyenne quadratique [RMS]" de la fonction WCC est appelée "énergie de corrélation croisée [CCE]",
- une deuxième mesure (M2) définissant une "valeur de décalage de crête avec le pourcentage le plus élevé de la totalité des valeurs de décalage de crête sur la totalité des "fenêtres de corrélation croisée" appelée "rapport de décalage de corrélation"(CLR), et
- une troisième mesure (M3) définissant un "rapport d'une partie la plus grande "d'énergie de corrélation croisée [CCE]" sur une partie restante de "l'énergie de corrélation croisée [CCE]" sur la totalité des "fenêtres de corrélation croisée" appelé "rapport RMS sur RMS" (RRR).

**22.** Le dispositif (SPCD) selon la revendication 21 renvoyant à la revendication 20, **caractérisé en ce que**
le processeur (PRC) exécute le module de programme (PGM) destiné à la détection de présence de sorte que la première mesure (M1), la deuxième mesure (M2) et la troisième mesure (M3) soient adaptées de façon à déterminer, dans le cas de la mention "OUI" (Y-S) concernant la présence du passager (PAS) dans le véhicule (VEH) et de l'existence des signaux d'accélération (ACS), deux types différents de véhicule (VEH),

- un premier type de véhicule, tel que train de banlieue, sur lequel des forces d'accélération faibles sur la totalité des trois axes physiques <"x, y, z"> sont exercées, et
- un deuxième type de véhicule, tel que bus ou taxi, sur lequel des forces d'accélération significativement plus élevées sur la totalité des trois axes physiques <"x, y, z"> sont exercées,

de sorte que,

- si la au moins une des trois mesures différentes est la troisième mesure (M3) et la troisième mesure (M3) est égale ou supérieure à la valeur seuil globale (THV), le premier type de véhicule soit déterminé et
- si deux des au moins trois mesures différentes sont la première mesure (M1) et la deuxième mesure (M2) et la première mesure (M1) et la deuxième mesure (M2) sont toutes les deux égales ou supérieures à la valeur seuil globale (THV), le deuxième type de véhicule soit déterminé.

**23.** Le dispositif (SPCD) selon l'une quelconque des revendications 19 à 22, **caractérisé en ce que**
le processeur (PRC) exécute le module de programme (PGM) destiné à la détection de présence de sorte que la valeur seuil (THV) soit au moins une valeur parmi une valeur arbitraire et une valeur déterminée expérimentalement ou automatiquement.

**24.** Le dispositif (SPCD) selon l'une quelconque des revendications 19 à 23, **caractérisé par**
l'utilisation d'une billetterie électronique de type "BIBO".

**25.** Le dispositif (SPCD) selon l'une quelconque des revendications 19 à 24, **caractérisé en ce que**
le véhicule (VEH) est un véhicule de transport public tel que bus, train, train urbain, métro, tramway, taxi ou avion, etc.

**26.** Le dispositif (SPCD) selon la revendication 18, **caractérisé par**

- un capteur (SE) destiné à la génération du premier signal de capteur (SS-1), qui est raccordé au processeur (PRC), conçu sous la forme d'un capteur de pression générant un premier signal de pression (PRS-1), un capteur d'humidité relative et capteur de température générant un premier signal de température et d'humidité relative (HTS-1), un capteur de champ magnétique générant un premier signal de champ magnétique (MFS-1) ou un capteur "d'unité de mesure inertielle" générant un premier signal "d'unité de mesure inertielle" (IMUS-1), et

- une unité émetteur-récepteur (TRU), qui est raccordée au processeur (PRC), recevant sous la forme du deuxième signal de capteur (SS-2) de manière correspondante un deuxième signal de pression (PRS-2) généré par un autre capteur de pression, un deuxième signal de température et d'humidité relative (HTS-2) généré par un autre capteur d'humidité relative et un autre capteur de température, un deuxième signal de champ magnétique (MFS-2) généré par un autre capteur de champ magnétique ou un deuxième signal "d'unité de mesure inertielle" (IMUS-2) généré par une autre "unité de mesure inertielle".

**27.** Une passerelle véhiculaire (VGW) de détection de présence à l'intérieur d'un véhicule (VEH) d'un passager (PAS) au moyen d'un dispositif de communication personnel intelligent (SPCD), plus particulièrement un téléphone multifonction, comprenant un processeur (PRC) avec un support à mémoire lisible par ordinateur (STM) grâce auquel au moins un premier signal de capteur associé à un passager (SS-1) du dispositif de communication personnel intelligent (SPCD) (SPCD) est comparé à au moins un deuxième signal de capteur associé à un véhicule (SS-2) du véhicule (), plus particulièrement de la passerelle véhiculaire (VGW) dans le véhicule (VEH), de sorte qu'une simple mention "OUI" (Y-S) ou mention "NON" (N-S) concernant la présence du passager (PAS) dans le véhicule (VEH) soit effectuée,
**caractérisé en ce que**
le processeur (PRC) exécute pour la détection de présence un module de programme (PGM) destiné à un traitement de données, qui est conservé en mémoire ou téléchargeable vers l'amont ou téléchargeable vers l'aval dans le support à mémoire (STM), de sorte que :

(a) dans une étape de prétraitement de signal (SPPS), les premier et deuxième signaux de capteur (SS-1, SS-2) soient chacun prétraités indépendamment par l'exécution d'au moins un rééchantillonnage (RS) et un calcul de grandeur (MC) de façon à induire des valeurs de grandeur spécifiques à un signal (MV-1, MV-2), qui plus particulièrement sont chacune prétraitées additionnellement par l'exécution d'une détection d'écrêtage (CD) qui est exécutée de préférence entre le rééchantillonnage (RS) et le calcul de grandeur (MC),

(b) dans une étape d'identification de véhicule (VIS)

(b1) les valeurs de grandeur spécifiques à un signal (MV-1, MV-2) sont comparées par l'application d'une "fonction de corrélation croisée [CCF]" de sorte que les valeurs de grandeur spécifiques à un signal (MV-1, MV-2) soient exécutées dans l'ordre suivant : "chevauchement dans le domaine temporel" (OTD), "corrélation croisée à fenêtres" (WCC) et métrisation (MEF) de façon à induire du fait de la métrisation (MEF) au moins une valeur d'identification basée sur la métrisation (IDV, IDV-1, IDV-2, IDV-3) et

(b2) les au moins une valeur d'identification basée sur la métrisation (IDV, IDV-1, IDV-2, IDV-3) sont comparées chacune à une valeur seuil globale (THV) de sorte que (IDF), si une des au moins une valeur d'identification basée sur la métrisation (IDV, IDV-1, IDV-2, IDV-3) se situe sous ou sous et égale à la valeur seuil (THV), la mention "NON" (N-S) concernant la présence du passager (PAS) dans le véhicule (VEH) soit effectuée, dans le cas contraire, la mention "OUI" (Y-S) concernant la présence du passager (PAS) dans le véhicule (VEH) soit effectuée, grâce à quoi plus particulièrement une quantité produite en sortie (OQ) est fournie de manière correspondante, qui est de préférence une valeur booléenne (BV).

**28.** La passerelle véhiculaire (VGW) selon la revendication 27, **caractérisée par**

- un capteur (SE) destiné à la génération du deuxième signal de capteur (SS-2), qui est raccordé au processeur (PRC), conçu sous la forme d'un accéléromètre ou d'un accéléromètre et d'un gyroscope générant des deuxièmes signaux d'accélération (ACS-2) du fait de la mesure de forces d'accélération sur la totalité des trois axes physiques <"x, y, z"> qui sont exercées sur le véhicule (VEH) et

- une unité émetteur-récepteur (TRU), qui est raccordée au processeur (PRC), recevant sous la forme du premier signal de capteur (SS-1) des premiers signaux d'accélération (ACS-1) générés du fait de la mesure de forces d'accélération sur la totalité des trois axes physiques <"x, y, z"> qui sont exercées sur le dispositif (SPCD).

**29.** La passerelle véhiculaire (VGW) selon la revendication 27 ou 28, plus particulièrement selon la revendication 28, **caractérisée en ce que**
le processeur (PRC) exécute le module de programme (PGM) destiné à la détection de présence de sorte que la métrisation (MEF) soit constituée par au moins une mesure parmi trois mesures différentes (M1, M2, M3),

- une première mesure (M1) définissant un rapport d'une "moyenne quadratique [RMS] sur crête" (PRMSR) d'une fonction de "corrélation croisée à fenêtres [WCC]", grâce à quoi la "moyenne quadratique [RMS]" de la fonction WCC est appelée "énergie de corrélation croisée [CCE]".
- une deuxième mesure (M2) définissant une "valeur de décalage de crête avec le pourcentage le plus élevé de la totalité des valeurs de décalage de crête sur la totalité des "fenêtres de corrélation croisée" appelée "rapport de décalage de corrélation"(CLR), et
- une troisième mesure (M3) définissant un "rapport d'une partie la plus grande "d'énergie de corrélation croisée [CCE]" sur une partie restante de "l'énergie de corrélation croisée [CCE]" sur la totalité des "fenêtres de corrélation croisée" appelé "rapport RMS sur RMS" (RRR).

**30.** La passerelle véhiculaire (VGW) selon la revendication 29 renvoyant à la revendication 28, **caractérisée en ce que** le processeur (PRC) exécute le module de programme (PGM) destiné à la détection de présence de sorte que la première mesure (M1), la deuxième mesure (M2) et la troisième mesure (M3) soient adaptées de façon à déterminer, dans le cas de la mention "OUI" (Y-S) concernant la présence du passager (PAS) dans le véhicule (VEH) et de l'existence des signaux d'accélération (ACS), deux types différents de véhicule (VEH),

- un premier type de véhicule, tel que train de banlieue, sur lequel des forces d'accélération faibles sur la totalité des trois axes physiques <"x, y, z"> sont exercées, et
- un deuxième type de véhicule, tel que bus ou taxi, sur lequel des forces d'accélération significativement plus élevées sur la totalité des trois axes physiques <"x, y, z"> sont exercées,

de sorte que,

- si la au moins une des trois mesures différentes est la troisième mesure (M3) et la troisième mesure (M3) est égale ou supérieure à la valeur seuil globale (THV), le premier type de véhicule soit déterminé et
- si deux des au moins trois mesures différentes sont la première mesure (M1) et la deuxième mesure (M2) et que la première mesure (M1) et la deuxième mesure (M2) sont toutes deux égales ou supérieures à la valeur seuil globale (THV), le deuxième type de véhicule soit déterminé.

**31.** La passerelle véhiculaire (VGW) selon l'une quelconque des revendications 27 à 30, **caractérisée en ce que** le processeur (PRC) exécute le module de programme (PGM) destiné à la détection de présence de sorte que la valeur seuil (THV) soit au moins une valeur parmi une valeur arbitraire et une valeur déterminée expérimentalement ou automatiquement.

**32.** La passerelle véhiculaire (VGW) selon l'une quelconque des revendications 27 à 31, **caractérisée par**
l'utilisation d'une billetterie électronique de type "BIBO".

**33.** La passerelle véhiculaire (VGW) selon l'une quelconque des revendications 27 à 32, **caractérisée en ce que** le véhicule (VEH) est un véhicule de transport public tel que bus, train, train urbain, métro, tramway, taxi ou avion, etc.

**34.** La passerelle véhiculaire (VGW) selon la revendication 27, **caractérisé par**

- un capteur (SE) destiné à la génération du deuxième signal de capteur (SS-2), qui est raccordé au processeur (PRC), conçu sous la forme d'un capteur de pression générant un deuxième signal de pression (PRS-2), un capteur d'humidité relative et un capteur de température générant un deuxième signal de température et d'humidité relative (HTS-2), un capteur de champ magnétique générant un deuxième signal de champ magnétique (MFS-2) ou un capteur "d'unité de mesure inertielle" générant un deuxième signal "d'unité de mesure inertielle" (IMUS-2), et
- une unité émetteur-récepteur (TRU), qui est raccordée au processeur (PRC), recevant sous la forme du premier signal de capteur (SS-1) chacun de manière correspondante un premier signal de pression (PRS-1) généré par un autre capteur de pression, un premier signal de température et d'humidité relative (HTS-1) généré par un autre capteur d'humidité relative et un autre capteur de température, un premier signal de champ magnétique (MFS-1) généré par un autre capteur de champ magnétique ou un premier signal "d'unité de mesure inertielle" (IMUS-1) généré par une autre "unité de mesure inertielle"

**35.** Un système de détection de présence de type BIBO à l'intérieur d'un véhicule (VEH) d'un passager (PAS) au moyen d'un dispositif de communication personnel intelligent (SPCD), plus particulièrement un téléphone multifonction, grâce auquel au moins un premier signal de capteur associé à un passager (SS-1) du dispositif de communication personnel intelligent (SPCD) est comparé à au moins un deuxième signal de capteur associé à un véhicule (SS-2) du véhicule (VEH), plus particulièrement d'une passerelle véhiculaire (VGW) dans le véhicule (VEH), de sorte qu'une simple mention "OUI" (Y-S) ou mention "NON" (N-S) concernant la présence du passager (PAS) dans le véhicule (VEH) soit effectuée,
**caractérisé par**
une liaison de communication (COL) entre une passerelle véhiculaire (VGW) et le dispositif de communication personnel intelligent (SPCD), grâce à quoi pour la détection de présence au moins un élément parmi la passerelle véhiculaire (VGW) et le dispositif de communication personnel intelligent (SPCD) est conçu selon l'une quelconque des revendications 27 à 34 respectivement les revendications 19 à 26 et comprend plus particulièrement un outil numérique selon l'une quelconque des revendications 9 à 18 destiné à l'exécution du procédé selon l'une quelconque des revendications 1 à 8.

FIG 1

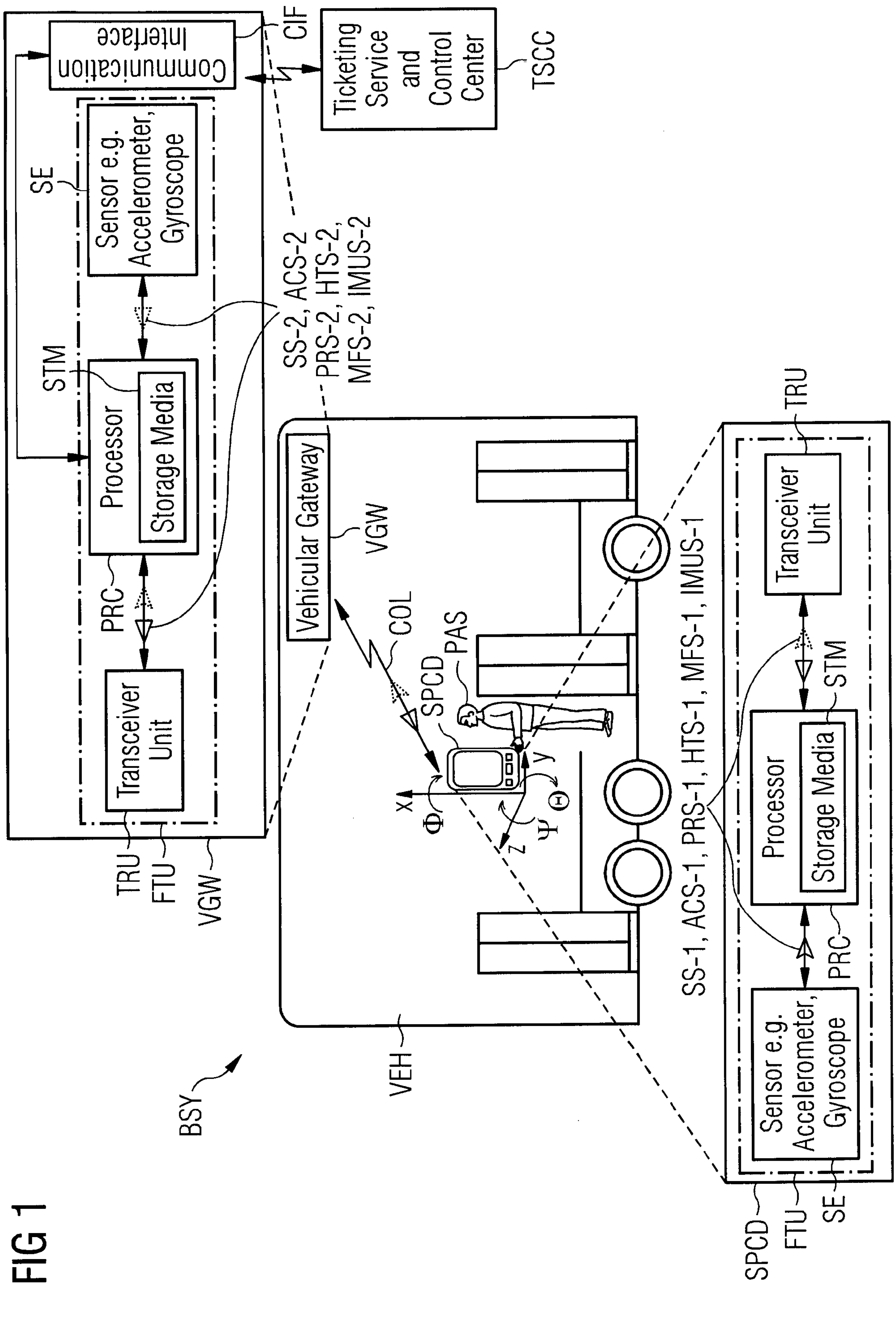
Communication Interface
CIF
Ticketing Service and Control Center
TSCC
SE
Sensor e.g. Accelerometer, Gyroscope
STM
Processor
Storage Media
PRC
Transceiver Unit
TRU
FTU
VGW
SS-2, ACS-2
PRS-2, HTS-2,
MFS-2, IMUS-2
Vehicular Gateway
VGW
COL
SPCD
PAS
x
y
z
Φ
Ψ
Θ
BSY
VEH
SS-1, ACS-1, PRS-1, HTS-1, MFS-1, IMUS-1
Transceiver Unit
TRU
STM
Processor
Storage Media
PRC
Sensor e.g. Accelerometer, Gyroscope
SPCD
FTU
SE

FIG 2

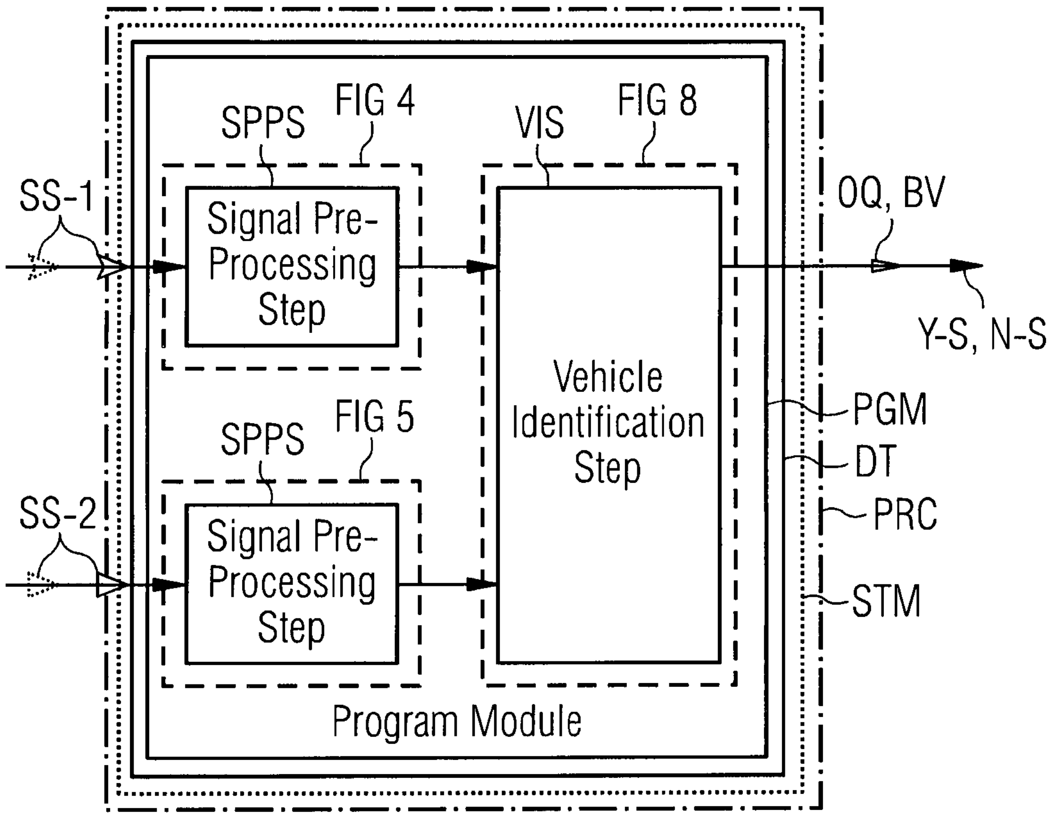
SPPS
FIG 4
VIS
FIG 8
SS-1
Signal Pre-Processing Step
OQ, BV
Y-S, N-S
Vehicle Identification Step
SPPS
FIG 5
PGM
DT
PRC
SS-2
Signal Pre-Processing Step
STM
Program Module

FIG 3a

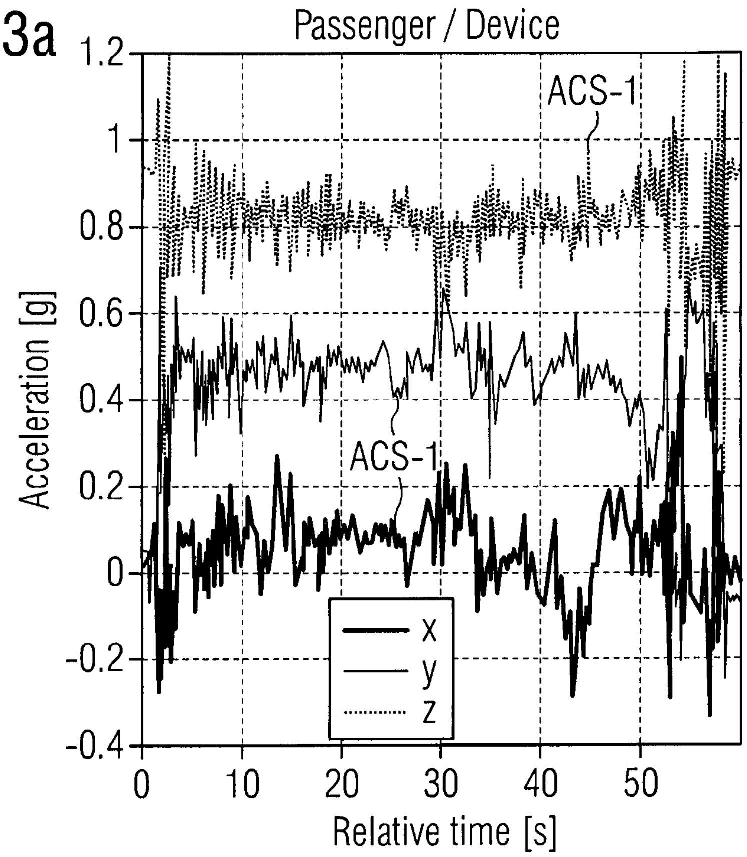
Passenger / Device
ACS-1
ACS-1
Acceleration [g]
1.2
1
0.8
0.6
0.4
0.2
0
-0.2
-0.4
0
10
20
30
40
50
Relative time [s]
x
y
z

FIG 3b

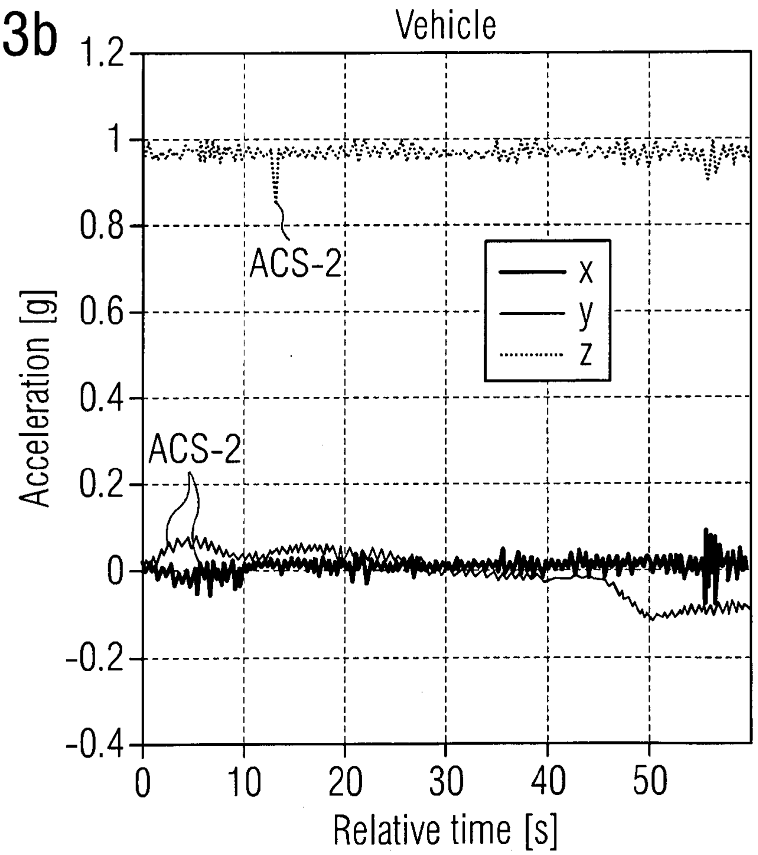
Vehicle
ACS-2
ACS-2
Acceleration [g]
1.2
1
0.8
0.6
0.4
0.2
0
-0.2
-0.4
0
10
20
30
40
50
Relative time [s]
x
y
z

FIG 4

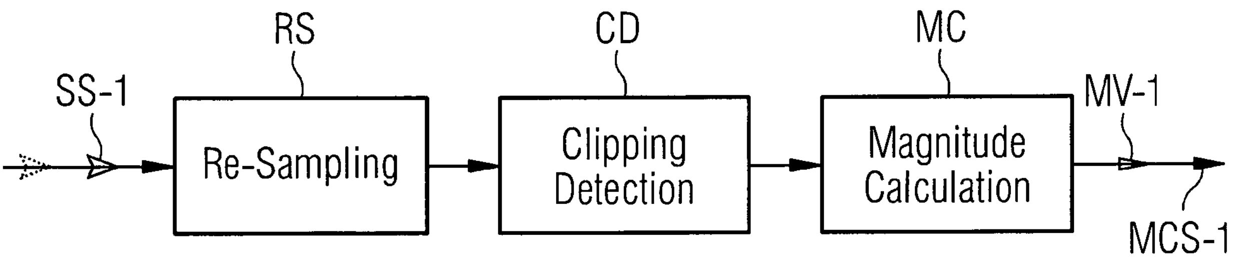
RS
CD
MC
SS-1
Re-Sampling
Clipping
Detection
Magnitude
Calculation
MV-1
MCS-1

FIG 5

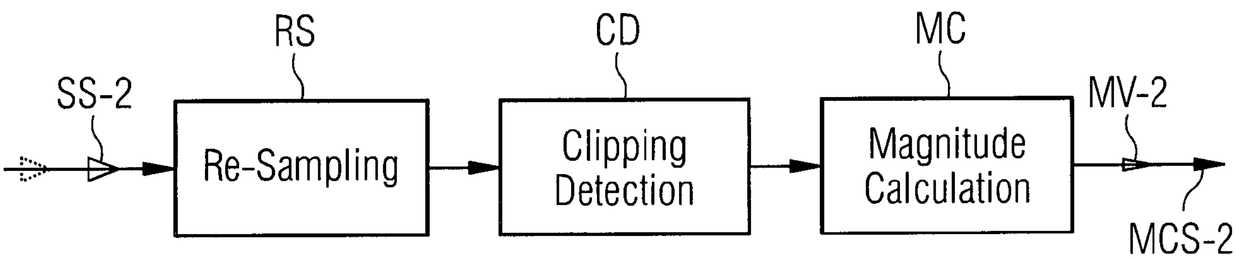
RS
CD
MC
SS-2
Re-Sampling
Clipping
Detection
Magnitude
Calculation
MV-2
MCS-2

FIG 6a

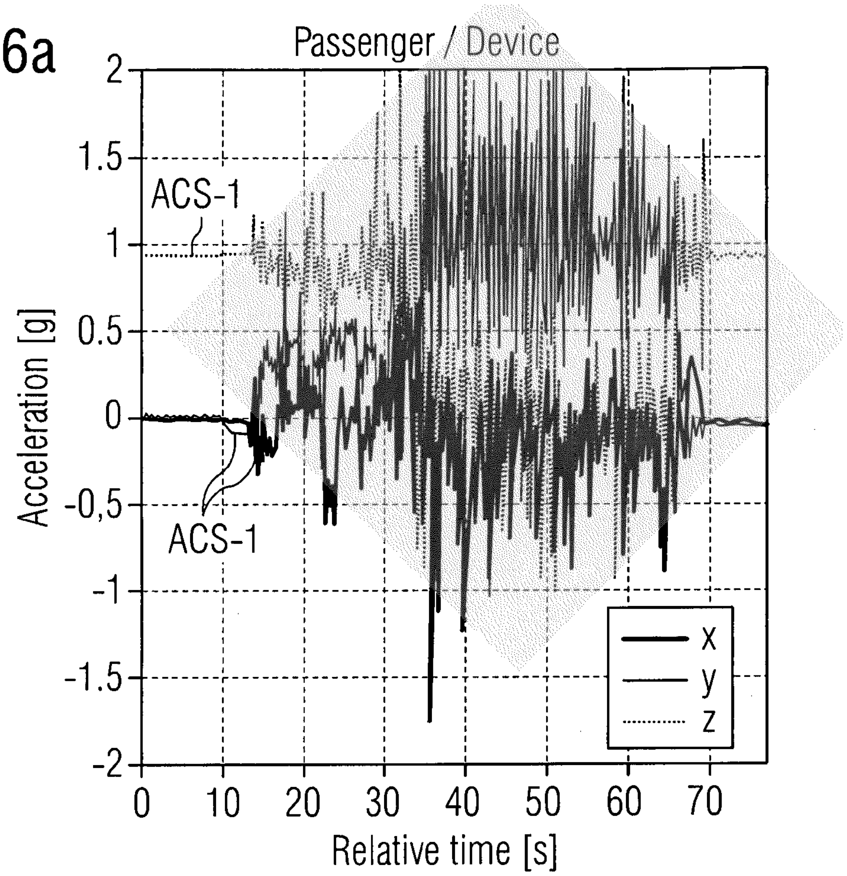
Passenger / Device
ACS-1
ACS-1
Acceleration [g]
Relative time [s]
x
y
z
2
1.5
1
0.5
0
-0,5
-1
-1.5
-2
0
10
20
30
40
50
60
70

FIG 6b

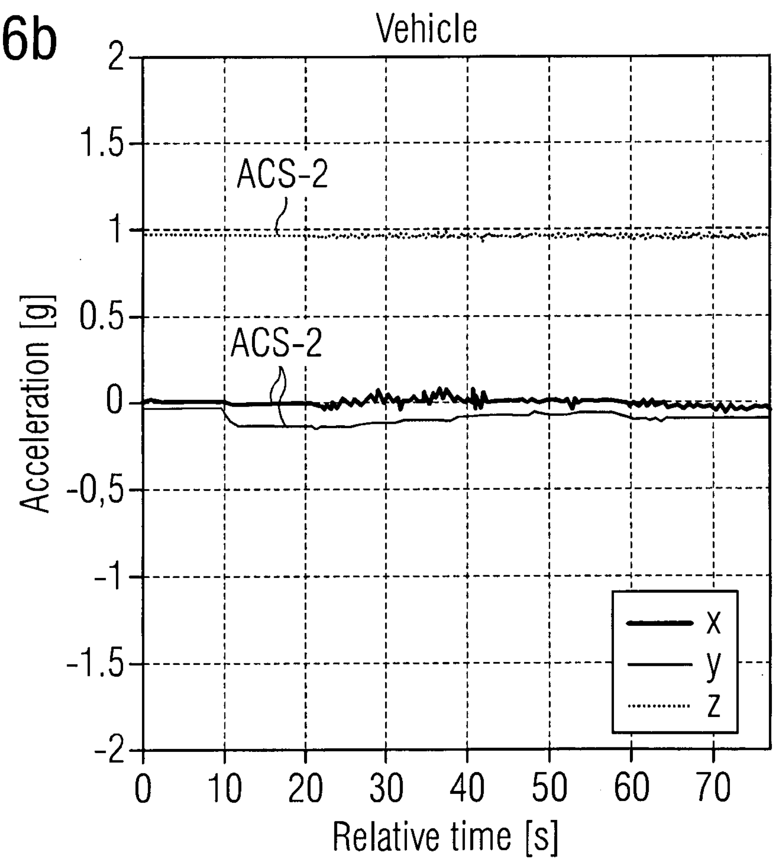
Vehicle
ACS-2
ACS-2
Acceleration [g]
Relative time [s]
x
y
z
2
1.5
1
0.5
0
-0,5
-1
-1.5
-2
0
10
20
30
40
50
60
70

FIG 7a

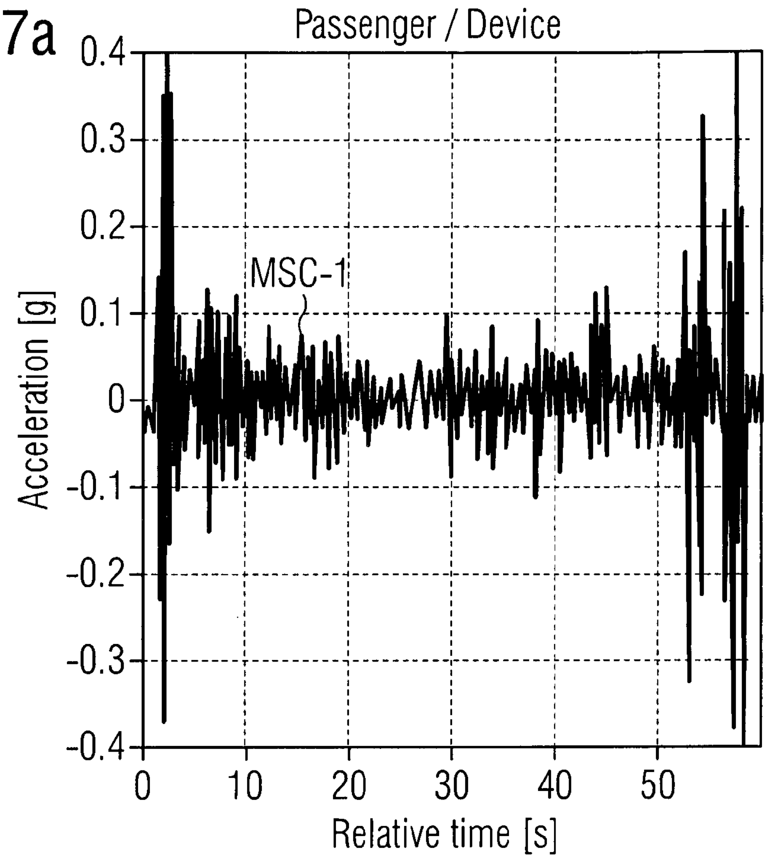
Passenger / Device
0.4
0.3
0.2
0.1
0
-0.1
-0.2
-0.3
-0.4
Acceleration [g]
MSC-1
0
10
20
30
40
50
Relative time [s]

FIG 7b

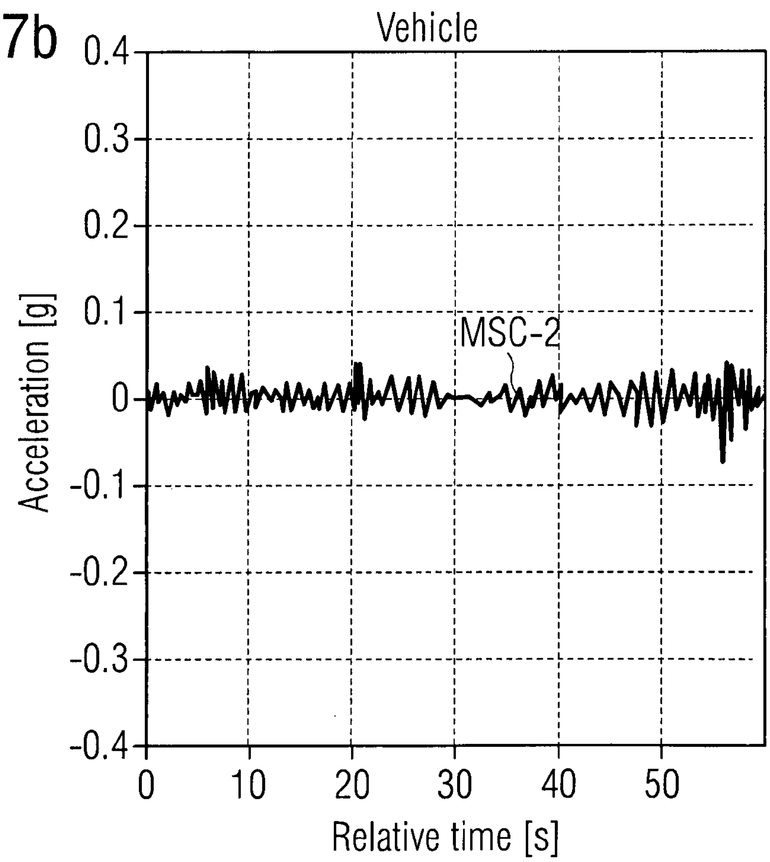
Vehicle
0.4
0.3
0.2
0.1
0
-0.1
-0.2
-0.3
-0.4
Acceleration [g]
MSC-2
0
10
20
30
40
50
Relative time [s]

FIG 8

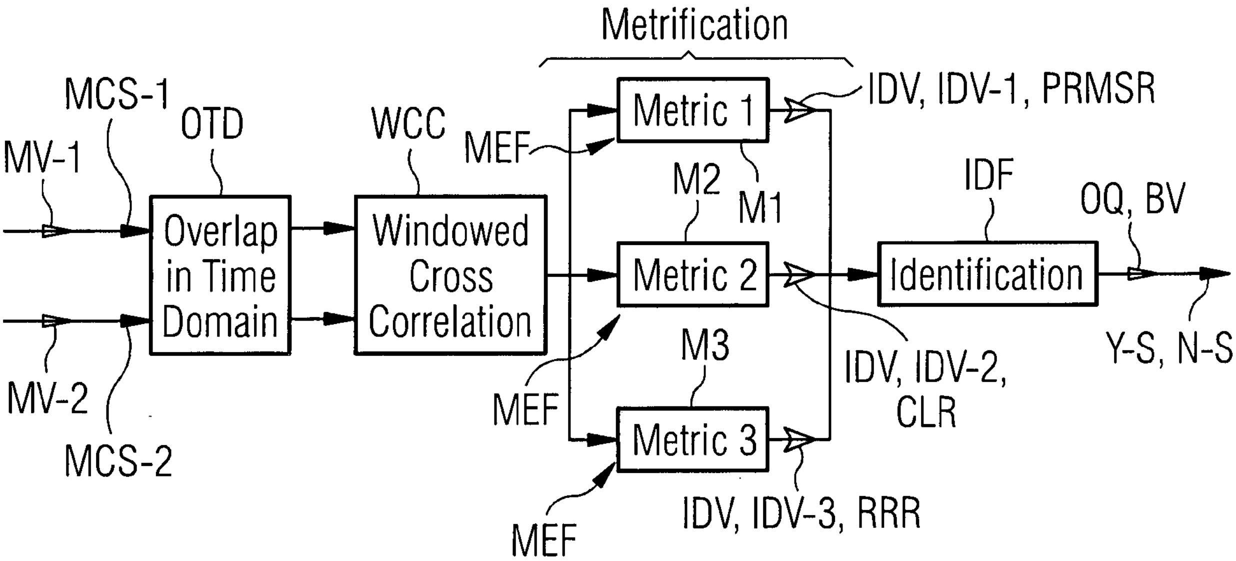
Metrification
MCS-1
OTD
WCC
MEF
Metric 1
IDV, IDV-1, PRMSR
MV-1
M2
M1
IDF
OQ, BV
Overlap in Time Domain
Windowed Cross Correlation
Metric 2
Identification
Y-S, N-S
IDV, IDV-2, CLR
M3
MV-2
MEF
MCS-2
Metric 3
MEF
IDV, IDV-3, RRR

FIG 9

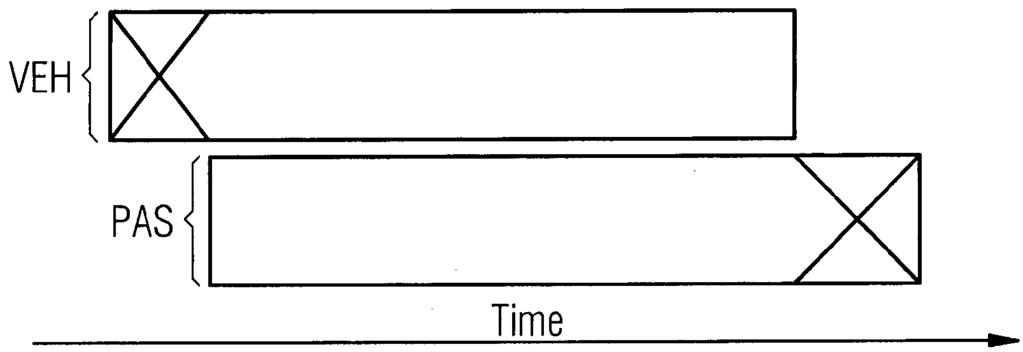
VEH
PAS
Time

FIG 10a

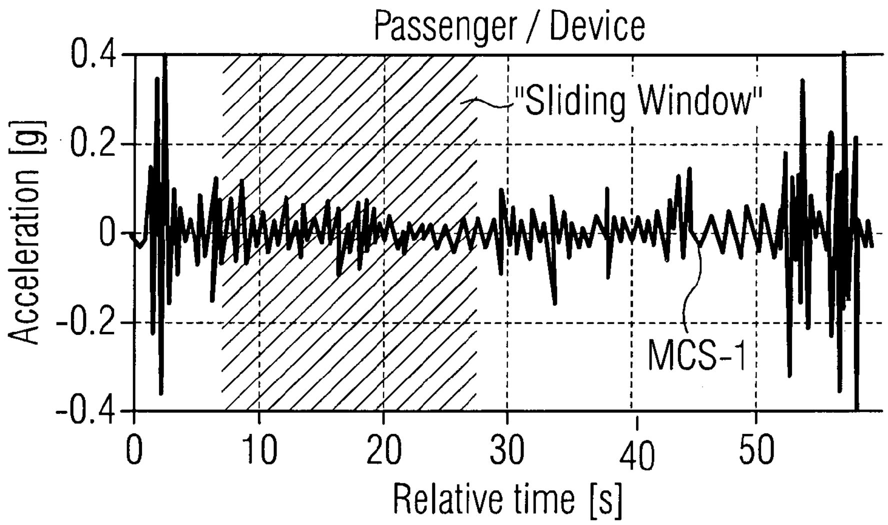


FIG 10b

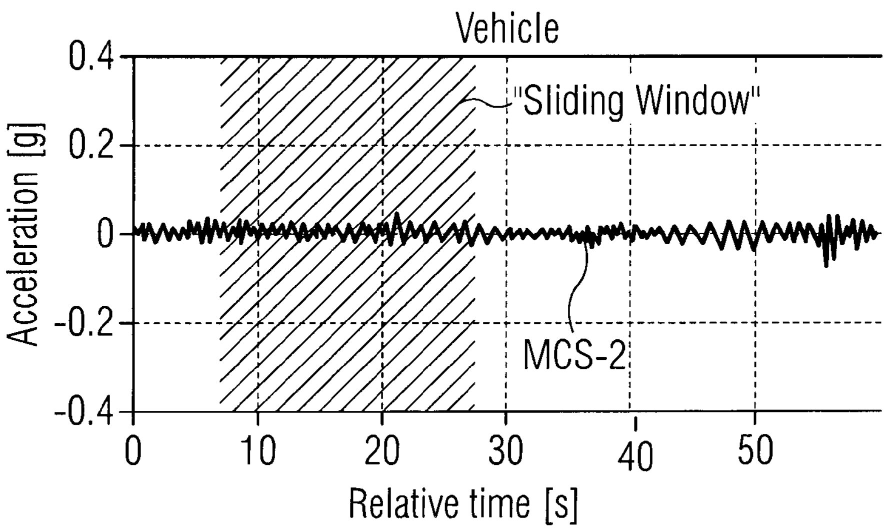


FIG 10c

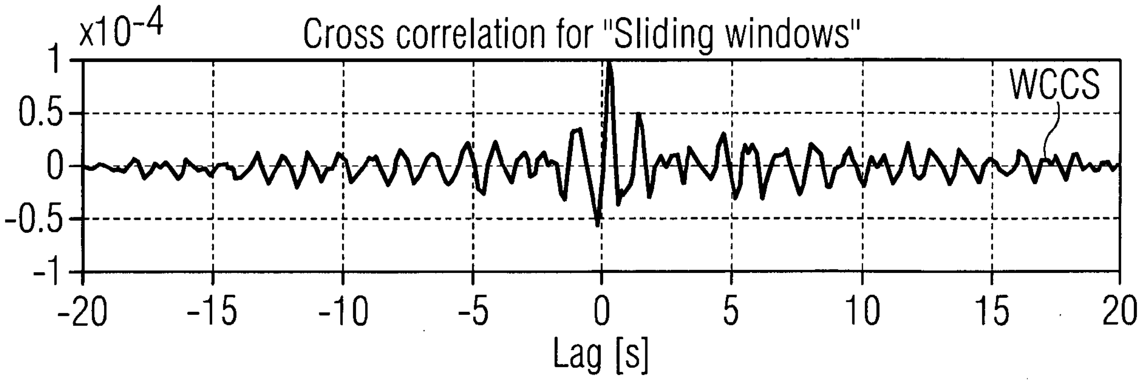

FIG 11

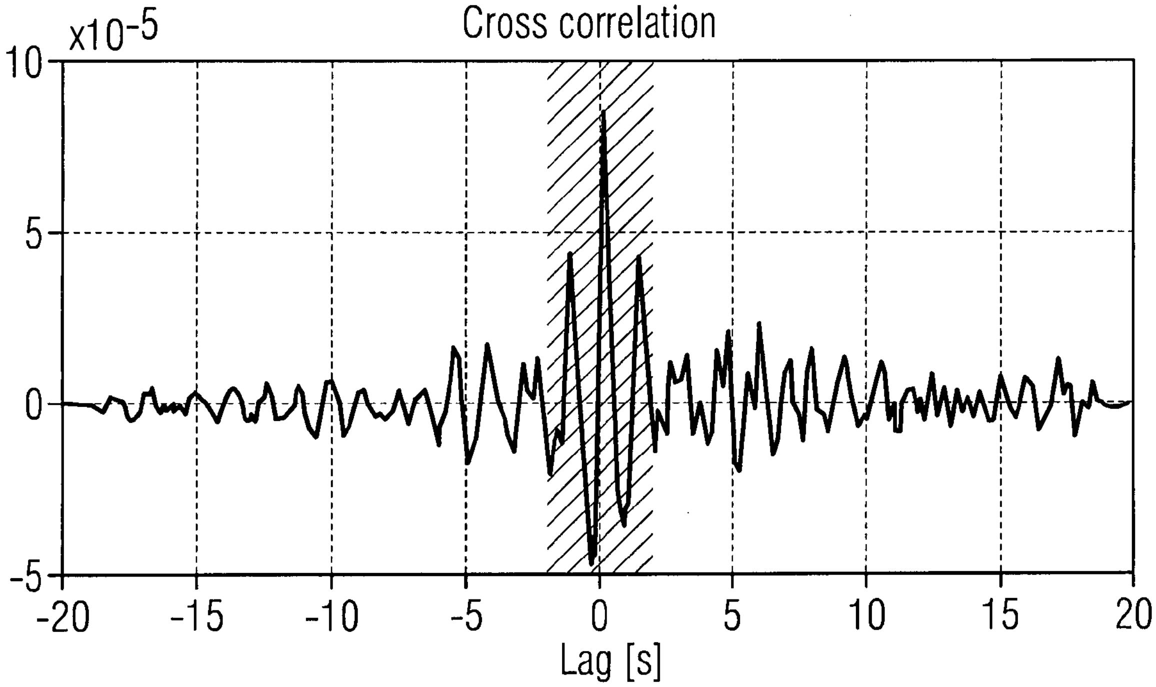

FIG 12a

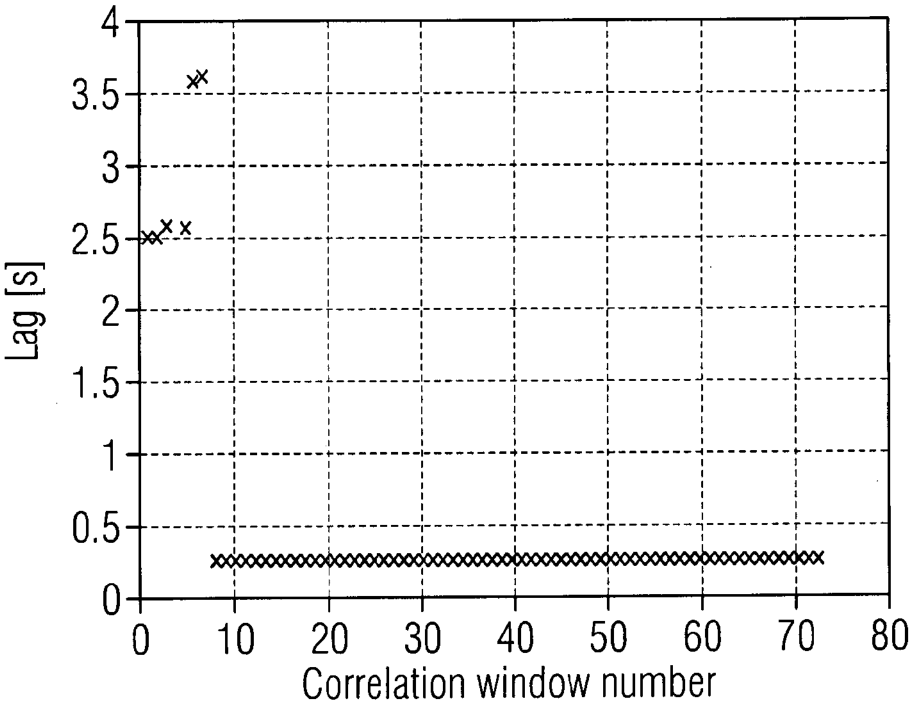


FIG 12b

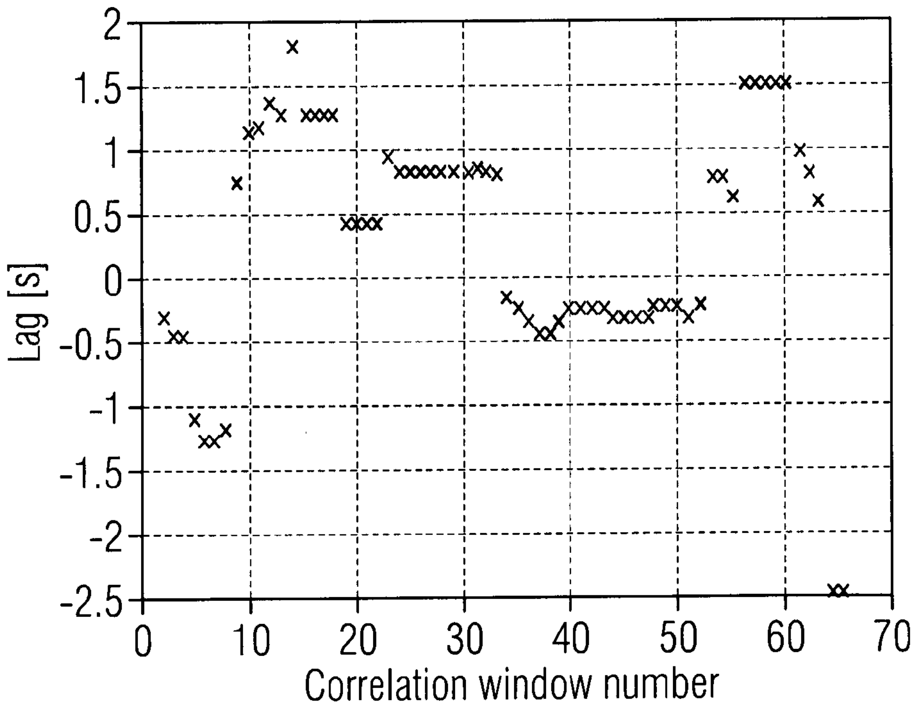

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102012009610 A1